# EUROPEAN PATENT APPLICATION

(11) **EP 1 338 992 A1**
(43) Date of publication of application: **27.08.2003**
(21) Application number: 01997765.1
(22) Date of filing: 22.11.2001
(51) Int. Cl.: G06F 17/60

(54) **DATA TERMINAL CAPABLE OF TRANSFERRING CIPHERED CONTENT DATA AND LICENSE ACQUIRED BY SOFTWARE**

(30) Priority: 24.11.2000 JP 2000358238
(71) Applicant: Sanyo Electric Co., Ltd., Moriguchi-shi, Osaka 570-8677 (JP); FUJITSU LIMITED, Kawasaki-shi, Kanagawa 211-8588 (JP); Hitachi, Ltd., Chiyoda-ku, Tokyo 101-8010 (JP)
(72) Inventor: Hori, Yoshihiro, c/o Sanyo Electric Co., Ltd, Moriguchi-shi, Osaka 570-8677 (JP); Kamimura, Toru, c/o Sanyo Electric Co., Ltd, Moriguchi-shi, Osaka 570-8677 (JP); Miyazono, Shinya, c/o Sanyo Electric Co., Ltd, Moriguchi-shi, Osaka 570-8677 (JP); Hatakeyama, Takahisa, c/o Fujitsu Limited, Kawasaki-shi, Kanagawa 211-8588 (JP); Hasebe, Takayuki, c/o Fujitsu Limited, Kawasaki-shi, Kanagawa 211-8588 (JP); Takahashi, Masataka, c/o PFU Limited, Kahoku-gun, Ishikawa 929-1192 (JP); Tunehiro, Ryuji, c/o Sys. Devel. Lab. Hitachi Ltd, Yokohama-shi, Kanagawa 244-0817 (JP); Ohmori,Y, c/o Kawasaki Fac. Nippon Columbia Co.Ltd, Kawasaki-shi, Kanagawa 210-0807 (JP)
(74) Representative: Glawe. Delfs. Moll
(86) International application number: JP0110258
(87) International publication number: WO02042966

(57) **Abstract**

A personal computer 50 holds encrypted contents data and a license acquired from a distribution server (10) over an Internet network (30) or from a music CD (60) using a CD-ROM drive. The personal computer (50), which is connected to a portable reproduction terminal (100) through a USB cable (70), performs a checkout operation for lending out, the encrypted contents data and the license to a memory card (110) attached to the portable reproduction terminal (100), and a checkin operation for returning the lent encrypted contents data and the lent license. As a result, it is possible to shift the encrypted contents data and the license acquired by software to the other device.

## Description

### Technical Field

The present invention relates to a data terminal device used in a data distribution system which protects a copyright and then distributes contents data or used in an administration system which prohibits the copy of contents data so as to protect a copyright, and to a program realizing the function of the data terminal device.

### Background Art

Recently, as information communication network and the like such as the Internet have developed, it becomes possible for each user to easily access network information from a personal terminal using a cellular phone or the like.

On such an information communication network, information is transmitted by a digital signal. Therefore, for example, even if a personal user copies music or movie data transmitted on the information communication network, it is possible to do so with hardly deteriorating sound quality or movie quality by copying the data.

Accordingly, in transmitting contents data such as music data or movie data for which a copyright exists on such an information communication network, the right of a copyright holder is badly infringed if no appropriate measures are taken for copyright protection.

Meanwhile, if contents data cannot be distributed through the information communication network which is currently greatly spreading to set the highest priority on the copyright protection, this is also disadvantageous to copyright holders who can basically collect royalties for the delivery of the holders' contents data.

Now, not the data distribution through the above-stated digital information communication network but an example of a recording medium on which digital data is recorded will be considered. As for a normally available CD (compact disk) recording thereon music data, it is basically possible to possible to freely copy the music data is copied from the CD to a magneto-optical disk (MD or the like) only if the use of the copied music is limited to personal use. However, a personal user who digitally records data is supposed to indirectly pay a fixed amount of money among the price of a digital recording device itself or that of a medium such as an MD to a copyright holder as a royalty.

Further, if music data which is digital signals is copied from a CD to an MD, these pieces of music data cannot be copied from the MD to another MD as digital data due to the constitutional restriction of the equipment so as to protect copyright in light of the fact that these pieces of music data are digital data which are hardly deteriorated by copying.

Under the circumstances, it is necessary to take sufficient measures for copyright protection since to distribution music data or movie data to the public through the information communication network per se is an act restricted by the public transmission right of each copyright holder.

In this case, it is necessary to prevent contents data, such as music data or movie data which is a work transmitted to the public through the information communication network, which is received once from being freely copied.

To this end, therefore, there is proposed a data distribution system in which a distribution server holding encrypted contents data obtained by encrypting contents data and a necessary license to decrypt and reproduce the encrypted contents data distributes the encrypted contents data and the license to a memory card attached to a download terminal such as a cellular phone and having a function for copyright protection through the download terminal. In this data distribution system, the class public encryption key of the memory card certified by a certificate authority in advance and a certificate therefor are transmitted to the distribution server at the time of receiving an encrypted contents data distribution request. Upon checking that the distribution server received the authenticated certificate, the encrypted contents data and the license are distributed to the memory card. When distributing the license, the distribution server and the memory card generate session keys different among distributions. The distribution server acquires the individual public encryption key of the memory card and the session key generated by the memory card using the class public encryption key of the memory card and the session key generated by the distribution server.

Finally, the distribution server transmits the license encrypted by the individual public encryption key of the memory card and further by the session key and the encrypted contents data to the memory card. The license and encrypted contents data thus received are recorded on the memory card.

If the encrypted contents data recorded on the memory card is to be reproduced, the memory card is attached to a portable reproduction terminal. The portable reproduction terminal includes a dedicated reproduction circuit which reads the encrypted contents data and the license key from the memory card, decrypts the encrypted contents data thus read using the license key, and reproduces and outputs the decrypted data to the outside. The license key is one of elements in the license.

If a cellular phone functions as both a download terminal and a portable reproduction terminal, the cellular phone includes a dedicated reproduction circuit besides ordinary conversation functions. The user of such a cellular phone can receive encrypted contents data from the distribution server using the user's cellular phone and reproduce the encrypted contents data.

In the meantime, services for distributing encrypted contents data to personal computers using the Internet are also provided. In the distribution of encrypted contents data to a personal computer, the encrypted contents data is distributed by means of a dedicated software installed to the personal computer and having a copyright protection function. It is basically prohibited to shift encrypted contents data and a license from the personal computer to which the encrypted contents data and license are distributed to the other computer and to copy the encrypted contents data and license from the viewpoints of the protection of copyright holders.

However, if it is completely impossible to fetch the encrypted

However, if it is completely impossible to fetch the encrypted contents data and license distributed to the personal computers from the personal computer, a portable reproduction terminal which does not have a communication function is disadvantageously incapable of recording the encrypted contents data and license on the memory card attached to the computer.

To solve this disadvantage, there is proposed an idea of the right of reproducing encrypted contents data, i.e., an idea called "checkout / checkin" of temporarily lending out, and returning a license to a portable reproduction terminal. It is requisite to be able to specify a borrower and to prevent the license from being freely fetched from the checkout destination at the time of checkout (lending out,), and requisite to return the license from the checkout destination at the time of checkin (returning).

To satisfy these conditions, the following systems have been proposed. A system specifies even a portable reproduction terminal including a memory card which is to reproduce data and checks out the data not to the memory card but to the portable reproduction terminal. A system has a peculiar structure of avoiding copy and prohibiting a portable reproduction terminal including a memory card from handling the memory card at all unless the terminal uses a dedicated software.

The former system has a disadvantage in that data cannot be reproduced by the other portable reproduction terminal even though the terminal uses a memory card. The latter system has a disadvantage in that the peculiar file structure hampers the versatility of memory cards.

### Disclosure of the Invention

It is therefore an object of the present invention to provide a data terminal device capable of lending out, and returning encrypted contents data and a license encrypted for copyright protection to and from a terminal device and a memory card attached to the terminal device without limiting a reproducible portable reproduction terminal.

It is another object of the present invention to provide a program for allowing a computer to execute lending and returning encrypted contents data and a license encrypted for copyright protection to and from a terminal device and a memory card attached to the terminal device without limiting a reproducible portable reproduction terminal

According to this invention, a data terminal is a data terminal device lending and returning of encrypted contents data obtained by encrypting contents data and a license for decrypting the encrypted contents data and obtaining the original contents data or for lending and returning the license to a data recording device, the data terminal device including: a storage unit storing the encrypted contents data, the license and lending information which is information for administrating the lending; a control unit; and an interface controlling data exchange between the data recording device and the control unit, wherein during the lending, the control unit receives an inherent ID capable of specifying the data recording device and allocated inherently to each data recording device from the data recording device through the interface, generates a lending ID inherent to each lending and for specifying a lending license for lending the encrypted contents data and the license or for lending the license, generates a lending license including the generated lending ID and for decrypting the encrypted contents data to obtain the original content based on the license stored in the storage unit, transmits the generated lending license or the lending license and the encrypted contents data to the data recording device through the interface, and adds the received inherent ID and the generated lending ID to the lending information while associating the received inherent ID with the generated lending ID, and in the return, when the control unit checks that the inherent ID is received from the data recording device through the interface, the received inherent ID coincides with the inherent ID included in the lending information, and that the lending license including the lending ID associated with the inherent ID included in the lending information is recorded in the data recording device, the control unit returns the lending license recorded on the data recording device or the lending license and the encrypted contents data decryptable based on the lending license from the data recording device, and deletes the lending ID and the inherent ID corresponding to the returned lending license from the lending information.

It is preferable that the data recording device holds authentication data demonstrating validity of the data recording device, and a first public encryption key having an inherent value to each the data recording device, the inherent ID is the first public encryption key, in the lending out and the returning, the control unit receives the authentication data from the data recording device through the interface, and receives the first public encryption key from the data recording device through the interface when determining that the received authentication data is valid.

It is preferable that the data recording device holds a first public encryption key having an inherent value to each the data recording device, and that in the lending out, the control unit encrypts the lending license using the received first public encryption key, and transmits the encrypted lending license to the data recording device through the interface.

It is preferable that the authentication data includes a second public encryption key decryptable in the data recording device, the data terminal device further includes: a symmetric key generation unit generating a first symmetric key by random numbers; a first encryption unit encrypting data using the second public encryption key; and a first decoding unit decrypting the encrypted data which is encrypted using the first symmetric key, in the lending out and the returning, the control unit transmits the first symmetric key generated by the symmetric key generation unit and encrypted using the second public encryption key extracted by the authentication processing to the data recording device through the interface, and that the control unit receives the first public encryption key, which is encrypted using the first symmetric key in the data recording device, through the interface, decrypts the received first public encryption key, which is encrypted with the first symmetric key, in the first decryption unit using the first symmetric key, and acquires the first public encryption key.

It is preferable that the data terminal device further includes: a second encryption unit encrypting the data using the first public encryption key; and a third encryption unit encrypting the data using the second symmetric key received from the data recording device, in the lending out and the returning, the data recording device receives the first public encryption key and the second symmetric key which are encrypted using the first symmetric key from the data recording device through the interface, and encrypts the first public encryption key and the second symmetric key encrypted using the received first symmetric key using the first symmetric key in the first decryption unit, and acquires the first public encryption key and the second symmetric key, and that in the lending out, the control unit encrypts the lending license in the second encryption unit using the first public encryption key, further encrypts the lending license encrypted using the first public encryption key in the third encryption unit using the second symmetric key, and transmits an output of the third encryption unit to the data recording device through the interface.

It is preferable that the lending information includes a possible lending frequency with which the encrypted contents data and the license or the license can be lent, in the lending out; the control unit further determines whether or not the encrypted contents data and the license or the license can be lent based on the possible lending frequency included in the lending information, and when determining that the encrypted contents data and the license or the license can be lent, the control unit generates the lending license, corrects the possible lending frequency by subtracting 1 from the possible lending frequency, and changes the lending information to add the lending ID and the inherent ID while associating the lending ID and the inherent ID with the possible lending frequency, in the return, the control unit changes the lending information so that the lending ID has a value obtained by incrementing the possible lending frequency associated with the lending ID by one.

It is preferable that in the lending out, the control unit generates the lending license including prohibition information for prohibiting the lending license from being copied and/or moved to the other device.

It is preferable that in the return, when the lending license or the lending license and the encrypted contents data decryptable based on the lending license are returned, the control unit instantly checks that the license including the lending ID included in the lending information is not recorded on the data recording device, and when it cannot be checked that the license is not recorded, the control unit does not change the lending information.

It is preferable that in the return, when the lending license or the lending license and the encrypted contents data decryptable based on the lending license are returned, the control unit instantly receives the inherent ID from the data recording device through the interface, rechecks that the received inherent ID coincides with the inherent ID included in the lending information, checks that the license including the lending ID associated with the inherent ID included in the lending information is recorded on the data recording device, and when recheck is not conducted or when check is conducted, the control unit does not change the lending information.

It is preferable that in the return, the control unit transmits the lending ID associated with the inherent ID included in the lending information to the data recording device through the interface, issues a request to transmit status information indicating whether or not the lending license including the transmitted lending ID is recorded on the data recording device, to the data recording device through the interface, receives the status information transmitted from the data recording device through the interface in response to the request, and checks based on the received status information that the lending license including the lending ID is recorded on the data recording device.

It is preferable that the control unit receives the status information from the data recording device, as data with an electronic signature demonstrating validity of the status information, determining whether the status information is valid based on the electronic signature, and checks that the lending license including the lending ID is recorded on the data recording device based on the received status information when determining that the status information is valid.

It is preferable that in the return, the control unit deletes the lending license or the lending license and the encrypted contents data decryptable based on the lending license, thereby returning the lending license or the lending license and the encrypted contents data decryptable based on the lending license from the data recording device.

It is preferable that in return, the control unit transmits a deletion license with which the encrypted contents data cannot be decrypted, to the data recording device through the interface, and overwrites the deletion license on the lending license to thereby delete the lending license from the data recording device.

Further, according to the present invention, a program allowing a computer to execute lending and returning of encrypted contents data obtained by encrypting contents data and a license for decrypting the encrypted contents data and obtaining the original contents data or for lending and returning the license, the computer being allowed to execute: a first step o receiving an inherent ID allocated inherently to each borrower from the data recording device; a second step, following the first step, of generating a lending ID for specifying a lending license inherent to each lending and lent to the borrower during the lending; a third step of generating the lending license including the generated lending ID, for decrypting the encrypted contents data and obtaining the original contents data; a fourth step of transmitting the encrypted contents data and the generated lending license or transmitting the lending license to the borrower; a fifth step of adding the generated lending ID and the received inherent ID to lending information for managing the lending while associating the generated lending ID with the received inherent ID; a sixth step, following the first step, of checking whether or not the received inherent ID coincides with the inherent ID included in the lending information and thereby checking whether the data recording device is the borrower of the lending license in the return; a seventh step of, when it is checked that the data recording device is the borrower of the lending license, checking whether the license including the lending ID associated with the inherent ID included in the lending information is recorded on the borrower; an eighth step of, when it is checked that the license including the lending ID associated with the inherent ID included in the lending information is recorded on the borrower, judging that the encrypted contents data and the lending license recorded on the borrower or the lending license can be returned, and returning the encrypted contents data and the lending license recorded on the borrower or the lending license from the borrower; and a ninth step of deleting the lending ID and the inherent ID corresponding to the returned lending license from the lending information.

It is preferable that the borrower holds authentication data demonstrating validity of the borrower, and a public encryption key having an inherent value to each the borrower, the inherent ID is the public encryption key, and the first step includes: a step of receiving the authentication data from the borrower; and a step of determining whether or not the received authentication data is valid, and, when it is determined that the received authentication data is valid, receiving the public encryption key from the borrower.

It is preferable that in the lending out, the computer is allowed to further execute a tenth step of encrypting the lending license using the received public encryption key, and that in the fourth step, the lending license encrypted in the tenth step is transmitted to the borrower.

It is preferable that in the lending out, the computer is allowed to further execute an eleventh step of checking a possible lending frequency indicating the frequency of lending the encrypted contents data and the license included in the lending information or lending the license to thereby determine whether the lending is permitted or prohibited, and, when it is determined that the lending is prohibited, stopping the lending, in the fifth step, the possible lending frequency is corrected to a value obtained by subtracting 1 from the possible lending frequency, and changes the lending information to add the lending ID and the inherent ID while associating the lending ID and the inherent ID with the corrected possible lending frequency, in the return, in the ninth step, the lending ID included in the returned lending license and the inherent ID associated with the lending ID are deleted from the lending information, and changing the lending information to correct the possible lending frequency, with which the lending ID is associated and recorded, to have a value obtained by adding one to the possible lending frequency.

It is preferable that in the third step, the lending license is generated to include prohibition information for prohibiting the borrower from copying and/or shifting the lending license to the other device.

It is preferable that the computer is allowed to further execute: a twelfth step of making the seventh step execute after completion of the eighth step; and a thirteenth step of, when it is checked in the twelfth step that the license including the lending ID associated with the inherent ID included in the lending information is recorded on the borrower, determining that the lending license is not returned, and stopping executing the ninth step.

It is preferable that the computer is allowed to further execute: a twelfth step of sequentially re-executing the first step, the sixth step, and the seventh step after completion of the eighth step; and a thirteenth, step of, when it is not checked in the re-executed sixth step that the data recording device is the borrower or when it is checked in the re-executed seventh step that the license including the lending ID associated with the inherent ID included in the lending information is recorded on the borrower, determining that the lending license is not returned from the borrower, and stopping executing the ninth step.

It is preferable that the computer is allowed to further execute: in the return, an eleventh step of transmitting the lending ID associated with the inherent ID included in the lending information to the borrower; a twelfth step of issuing a request to transmit status information indicating whether or not the license including the transmitted lending ID is recorded on the borrower, to the borrower; and a thirteenth step of receiving the status information transmitted from the borrower in response to the request, and wherein in the seventh step, it is checked based on the received status information that the license including the lending ID is recorded on the borrower.

It is preferable that in the thirteenth step, the status information is received from the borrower as electronic signature-added data having an electronic signature demonstrating validity of the status information added to the status information, and it is determined whether the status information included in the electronic signature-added data is valid based on the electronic signature included in the received electronic signature-added data, and, when it is determined that the status information included in the electronic signature-added data is invalid, execution of the following steps is stopped.

It is preferable that in the eighth step, the encrypted contents data and the lending license or the lending license is deleted from the borrower, thereby returning the encrypted contents data and the lending license or the lending license from the borrower.

### Brief Description of the Drawings

Fig. 1 is a schematic diagram for conceptually describing a data distribution system.
Fig. 2 shows characteristics of data, information and the like for communication in the data distribution system shown in Fig. 1.
Fig. 3 shows the characteristics of data, information and the like for communication in the data distribution system shown in Fig. 1.
Fig. 4 is a schematic block diagram showing the configuration of a distribution server.
Fig. 5 is a schematic block diagram showing the configuration of a personal computer.
Fig. 6 shows the configuration of a content list file in the hard disk of the personal computer.
Fig. 7 is a block diagram showing the configuration of a portable reproduction terminal.
Fig. 8 is a block diagram showing the configuration of a memory card.
Fig. 9 shows the configuration of a reproduction list file in the memory card.
Fig. 10 is the first flow chart for describing distribution operation in the data distribution system shown in Fig. 1.
Fig. 11 is the second flow chart for describing distribution operation in the data distribution system shown in Fig. 1.
Fig. 12 is the third flow chart for describing distribution operation in the data distribution system shown in Fig. 1,
Fig. 13 is the fourth flow chart for describing distribution operation in the data distribution system shown in Fig. 1.
Fig. 14 is a functional block diagram for describing ripping operation.
Fig. 15 is a flow chart for describing the ripping operation in the data distribution system shown in Fig. 1.
Fig. 16 is the first flow chart for describing checkout operation for the license of encrypted contents data in the data distribution system shown in Fig. 1.
Fig. 17 is the second flow chart for describing the checkout operation for the license of the encrypted contents data in the data distribution system shown in Fig. 1.
Fig. 18 is the third flow chart for describing the checkout operation for the license of the encrypted contents data in the data distribution system shown in Fig. 1.
Fig. 19 is the fourth flow chart for describing the checkout operation for the license of the encrypted contents data in the data distribution system shown in Fig. 1.
Fig. 20 is the first flow chart for describing checkin operation for the license of the encrypted contents data in the data distribution system shown in Fig. 1.
Fig. 21 is the second flow chart for describing the checkin operation for the license of the encrypted contents data in the data distribution system shown in Fig. 1.
Fig. 22 is the third flow chart for describing the checkin operation for the license of the encrypted contents data in the data distribution system shown in Fig. 1.
Fig. 23 is the fourth flow chart for describing the checkin operation for the license of the encrypted contents data in the data distribution system shown in Fig. 1.
Fig. 24 is the fifth flow chart for describing the checkin operation for the license of the encrypted contents data in the data distribution system shown in Fig. 1.
Fig. 25 is the sixth flow chart for describing the checkin operation for the license of the encrypted contents data in the data distribution system shown in Fig. 1.
Fig. 26 is the seventh flow chart for describing the checkin operation for the license of the encrypted contents data in the data distribution system shown in Fig. 1.
Fig. 27 is the eighth flow chart for describing the checkin operation for the license of the encrypted contents data in the data distribution system shown in Fig. 1.
Fig. 28 is the first flow chart for describing the reproduction operation of a portable reproduction terminal.
Fig. 29 is the second flow chart for describing the reproduction operation of the portable reproduction terminal.

### Best Modes for Carrying out the Invention

The embodiment of the present invention will be described hereinafter in detail with reference to the drawings. It is noted that the same or corresponding elements in the drawings are denoted by the same reference symbols, respectively and will not be repeatedly described.

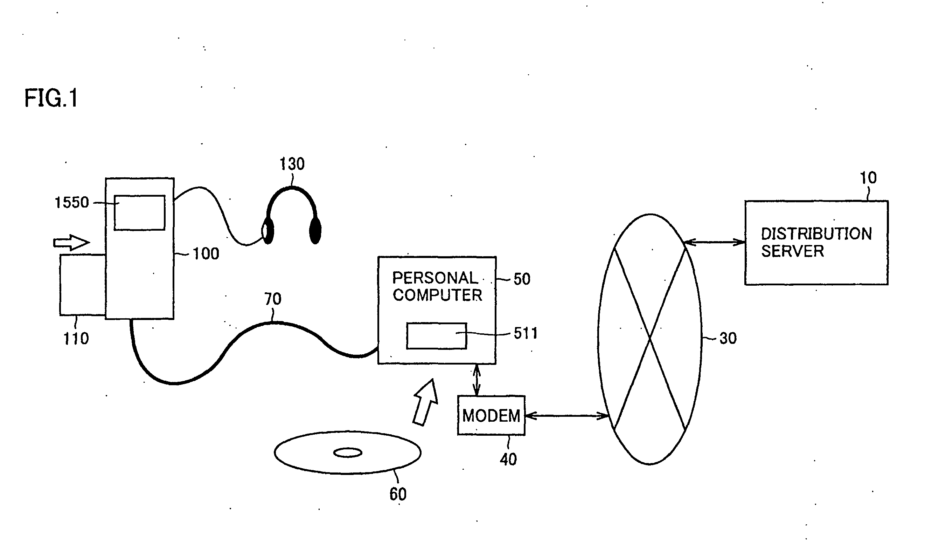

Fig. 1 is a schematic diagram for conceptually describing the overall configuration of a data distribution system in which a data terminal device (personal computer) according to the present invention acquires encrypted contents data.

The configuration of the data distribution system for distributing digital music data to the user of each personal computer through the Internet will be described by way of example. However, as will be obvious from the following description, the present invention is not to be limited by such an example but can be applied to the distribution of contents data as other works such as image data and moving image data.

Referring to Fig. 1, a distribution server 10 receives a distribution request from the user of each personal computer 50 through a modem 40 and an Internet network 30. Distribution server 10 performs an authentication processing to determine whether or not personal computer 50 which accesses distribution server to 10 for data distribution has valid authentication data, i.e., whether personal computer 50 is a valid personal computer. If personal computer 50 is valid, distribution server 10 encrypts music data according to a predetermined cipher system, and transmits to the valid personal computer the encrypted contents data and a license which is necessary information to reproduce the encrypted contents data through Internet network 30 and modem 40.

Personal computer 50 receives the encrypted contents data from distribution server 50 through modem 40 and Internet network 30. Namely, personal computer 50 includes therein a license administration module which receives the encrypted contents data and the license by a program from distribution server 10 through Internet network 30 or the like. The license administration module will be described later in detail.

Further, in Fig. 1, personal computer 50 generates encrypted contents data and a license which can be used only locally to reproduce the encrypted contents data from a music CD (Compact Disk) 60 on which music data is recorded by ripping. The generation of the encrypted contents data and the license will be described later in detail.

Personal computer 50 which acquires the encrypted contents data and the license is connected to a portable reproduction terminal 100 by a USB (Universal Serial Bus) cable 70, and is capable of transmitting the encrypted contents data and the license acquired from distribution server 10 or music CD 60 to a memory card 110 attached to portable reproduction terminal 100 by checkout to be described later.

In the data distribution system shown in Fig. 1, therefore, personal computer 50 receives the encrypted contents data and the license from distribution server 10 through modem 40 and Internet network 30, or acquires music data from music CD 60 to generate the encrypted contents data and the license. If so, the user of portable reproduction terminal 100 which does not have a function of directly receiving (downloading) the license from distribution server 10 can acquire the encrypted contents data and the license by allowing personal computer 50 intervene.

Further, the user can reproduce and listen to such contents data through, for example, headphones 130 or the like connected to portable reproduction terminal 100.

By so constituting the system, distribution server 10 can distribute the encrypted contents data and the license only to personal computer 50 including the valid license protection module. In addition, portable reproduction terminal 100 can acquire the encrypted contents data and the license only through personal computer 50 which includes the valid license protection module.

Moreover, if distribution server 10 calculates the frequency of distributing the encrypted contents data and the license for one song in accordance with, for example, a contract with the user and an Internet provider collects a royalty as part of a license fee generated whenever the user of the personal computer downloads the encrypted contents data or the license, each copyright holder can easily secure the holder's royalties.

Even the user who does not have a reproduction terminal to which data can be distributed directly from the distribution server can obtain a royalty as part of a license fee generated whenever the user of the personal computer downloads the encrypted contents data or the license.

With the configuration shown in Fig. 1, the following systems are necessary to enable the portable reproduction terminal or the user of the personal computer to reproduce the contents data which is distributed to the terminal or the user after being encrypted. The first is a system for distributing an encryption key for communication, the second is the system for encrypting to-be-distributed contents data itself, and the third is a constitution which realizes contents data protection so as to prevent the contents data thus distributed from being secondarily used.

According to the present invention, the portable reproduction terminal includes a reproduction device 1550, and personal computer 50 includes a license administration module 511 in order to realize the content protection function. Further, memory card 110 includes a content protection function having a controller built therein.

In the embodiments of the present invention, configurations for enriching an authentication and check function for the shifting destination of these pieces of contents data is enriched to prevent the output of the contents data to a recording device (personal computer including the memory card or the license administration module) or reproduction terminal (the portable reproduction terminal or personal computer which includes a reproduction device or license administration module and which can reproduce the content) which is unauthenticated or the private decryption key which holds therein is leaked particularly when each session of distribution, reproduction, checkout and checkin occurs, to thereby strengthen contents data copyright protection, will be described.

In the following description, a processing for transmitting the encrypted contents data and/or license data to the license administration module or memory card of each personal computer from distribution server is referred to as "distribution".

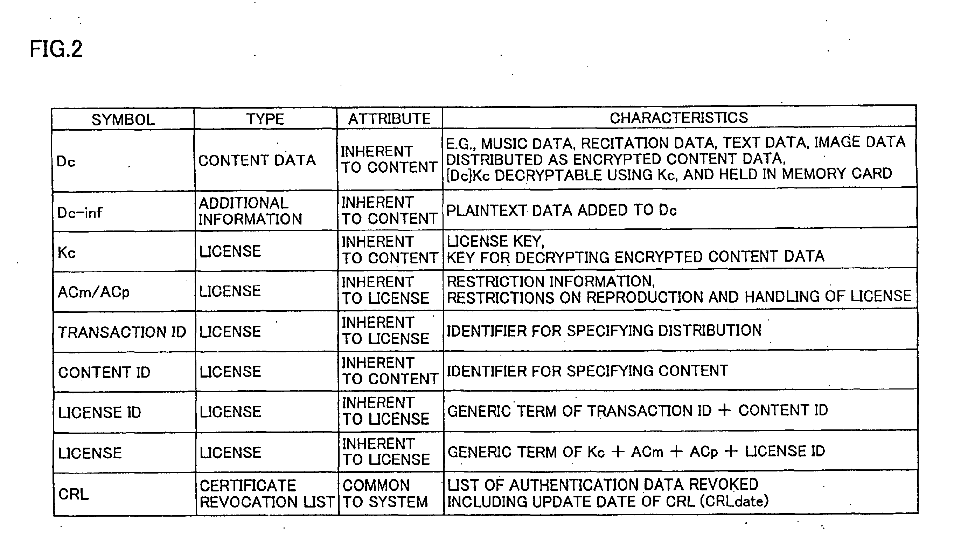

Fig. 2 describes the characteristics of data, information and the like used in the data distribution system shown in Fig. 1 for communication.

Data distributed from distribution server 10 will first be described. Dc is contents data such as music data. Contents data Dc is encrypted into a form decryptable with a license key Kc. Encrypted contents data {Dc}Kc, which prepared by the encryption into a form decryptable with license key Kc, is distributed in this form from distribution server 10 to each user.

In the following description, expression {Y}X indicates that data Y is prepared by the encryption into a form decryptable with a decryption key X.

Further, distribution server 10 distributes additional information Dc-inf including information related to copyright or server access on the contents data, as well as the encrypted contents data. Additional information Dc-inf is plaintext information. In addition, a transaction ID which is an identifier for specifying the distribution of the license key or the like from distribution server 10 is exchanged between distribution server 10 and personal computer 50. Further, there are a content ID which is an identifier for discriminating contents data Dc, access control information ACm which is generated based on license purchase condition AC including information on the number of licenses and function restriction determined by designation of the user and which is information on the restriction of access to the recording device (memory card or license administration module), reproduction control information ACp which is information on the restriction of reproduction on the reproduction terminal, and the like. Access control information ACm is restriction information for the output of the license key from the memory card or the license administration module, and includes reproducible frequency and control information on copy and shift of license. Reproduction restriction information ACp is control information for determining whether to permit reproduction to the content reproduction device receives the license key for reproduction, and includes reproduction term, reproduction range restriction, reproduction rate change restriction, reproduction range designation (partial license) and the like. The transaction ID and the content ID will be generically referred to as "license ID's" hereinafter, and license key Kc, the license ID, access control information ACm, and reproduction control information ACp will be generically referred to as "licenses" hereinafter.

In the embodiments of the present invention, a certificate revocation list CRL (Certificate Revocation List) is employed so as to be able to prohibit the distribution, reproduction, checkout and checkin of contents data for each recording device or each class of the reproduction terminal reproducing the contents data.

Certificate revocation list CRL is a data file in which identification codes for identifying class certificates held by the reproduction terminals and recording devices prohibited from the distribution, reproduction, checkout and checkin of licenses are listed. If receiving a class certificate which includes the identification code listed in certificate revocation list CRL, distribution server 10 is prohibited from providing a license key to the transmitting end of the class certificate. The class certificate will be described later.

Certificate revocation list CRL is administered in distribution server 10 and also recorded and held by the recording device (the hard disk 530 of personal computer 50 including memory card 110 and license administration module 511). Such a certificate revocation list CRL needs to be occasionally updated to the latest state. As for the update of certificate revocation list CRL of the recording device, if the license of the license key or the like is to be distributed, the update date of certificate revocation list CRL received from personal computer 50 including the memory card or the license administration module is compared with the update date of certificate revocation list CRL operated by distribution server 10. If the former update date is not the latest date, distribution server 10 distributes certification revocation list CRL to the memory card or license administration module 511 of personal computer 50. Further, as for the checkout and checkin of the encrypted contents data and the license, a certificate revocation list update processing is performed between memory card 110 and license administration module 511 of personal computer 50. In addition, the update of certificate revocation list CRL can be realized if a sender transmits the latest or newer certificate revocation list to rewrite the certificate revocation list held by the receiver. The update can be also realized if the sender generates differential data added to the update date of the certificate revocation list held by the receiver end and transmits the differential data to the receiver to add the differential data to the certificate revocation list held by the receiver. In the former update method; generation date data on certificate revocation list CRL or recording date data on each identification code listed therein is described. This generation date data or the filly added identification code recording date data becomes the update date data on the certificate revocation list. In the latter update method, recording date data on each identification code described in the list is described.

In the following description, it is assumed that the update processing of certificate revocation list CRL conducted from distribution server 10 to license administration module 511 of personal computer 50 is conducted by updating and adding differential data CRL and that conducted from distribution server 10 to license administration module 511 of personal computer 50 and to memory card 110 is conducted by transmitting a newer certificate revocation list to thereby rewrite the list.

In this way, certificate revocation list CRL is held and handled by not only the distribution server but also memory card 110 or license administration module 511 installed in personal computer 50, thereby making it possible to prohibit the portable reproduction terminal from reproducing the contents data, and to prohibit the license key from being supplied to the reproduction terminal (such as portable reproduction terminal 100) and the recording device (such as memory card 110 and license administration module 511 installed in personal computer 50) the class key of which leaks even for the processings performed without the intervention of distribution server such as the download, checkout and checkin of the contents data.

As can be seen, the certificate revocation list held by the memory card or administrated by the license administration module of the personal computer and recorded in the hard disk thereof is constituted to sequentially update data when being distributed. In addition, certificate revocation list CRL by the memory card or the license administration module is administrated by recording CRL in a tamper resistant module or doing other things so that CRL cannot be tampered by a file system, an application program or the like. As a result, it is possible to guarantee stronger copyright protection on data.

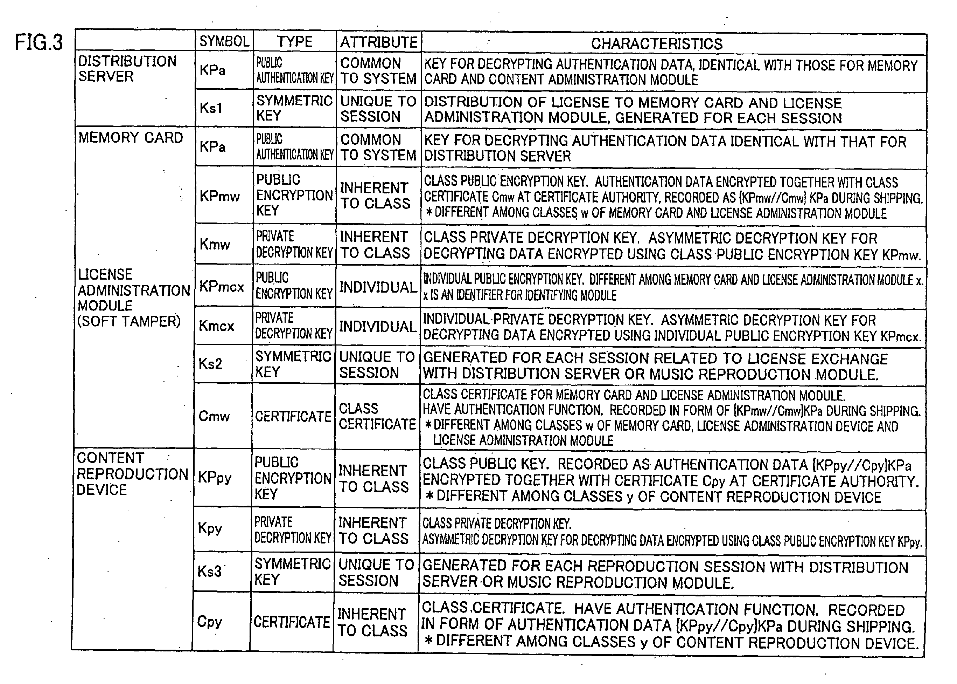

Fig. 3 describes the characteristics of authentication data, information and the like used in the data distribution system shown in Fig. 1.

The reproduction terminal and the recording device, to be specific, the reproduction device and the memory card installed in the reproduction terminal or the license administration module installed in the personal computer are respectively provided with inherent public encryption keys KPpy and KPmw. The public encryption key for the reproduction device is KPpy, and that for the memory card or the license administration module is KPmw. In addition, the reproduction device is provided with an inherent private decryption key Kpy paired with public encryption key KPpy, and the memory card or the license administration module is provided with an inherent private decryption key Kmw paired with public encryption key KPmw. These public encryption keys and private decryption keys have different values among the classes (structural administration units such as type and lot) of the reproduction device, the memory card and the license administration module. These public encryption keys and private decryption keys will be generically referred to as "class keys" hereinafter, the public encryption keys will be referred to as "class public encryption keys" and the private decryption keys will be referred to as "class private decryption keys".

Further, the reproduction device is provided with Cpy as a class certificate therefor, and the memory card and the license administration modules are provided with Cmw's as class certificates therefor, respectively.

These class certificates hold different information among the classes of reproduction devices, memory cards, and license administration modules. Moreover, each class certificate includes an identification code, which code is paired with the class public encryption key. This class, i.e., the unit which holds a same class certificate, a same class public encryption key and a same class private decryption key is a unit for prohibiting the license key from being provided based on certificate revocation list CRL.

The public encryption keys and class certificates inherent to the reproduction device and the memory card or license administration module are in the form of authentication data {KPpy//Cpy}KPa and authentication data {KPmw//Cmw}KPa, respectively, and recorded on the reproduction device (portable reproduction terminal) and the memory card or the license administration module at the time of shipping, respectively. As will be described later in detail, KPa is a common public authentication key in the distribution system.

As encryption keys for holding the secret of data in the distribution and receipt of licenses, symmetric keys Ks1 to Ks3 which are generated by distribution server 10, reproduction device 1550, memory card 110 and license administration module 511 whenever license key-based communication such as the distribution of licenses, reproduction, checkout and checkin is held, are used.

Symmetric keys Ks1 to Ks3 are inherent symmetric keys which are generated for each "session" that is the unit of communication or that of access between the distribution server and reproduction device 1550, memory card 110 or license administration module 511 and will be, therefore, also referred to as "session keys" hereinafter.

Session keys Ks1 to Ks3 are administrated by the distribution server, the reproduction device, the memory card and the license administration module by allowing each communication session to have an inherent value. To be specific, session key Ks1 is generated by the distribution server for each distribution session. Session key Ks2 is generated by the memory card or the license administration module for each distribution session, each reproduction session, each checkout session and each checkin session, respectively. Session key Ks3 is generated by the reproduction device for each reproduction session. In each session, the corresponding session key is exchanged, session keys generated by the other equipment are received, encryption is executed using the session keys, and then a license such as a license key is transmitted, thereby making it possible to improve the security strength of the session.

Furthermore, memory card 110 or license administration module 511 hold a public encryption key KPmcx and a private decryption key Kmcx to decrypt the encrypted data with public encryption key KPmcx which is managed every memory cards or license administration modules.

Public encryption key KPmcx and private decryption key Kmcx will be generically referred to as "individual keys", public encryption key KPmcx will be referred to as "individual public encryption key", and private decryption key Kmcx will be referred to as "individual private decryption key".

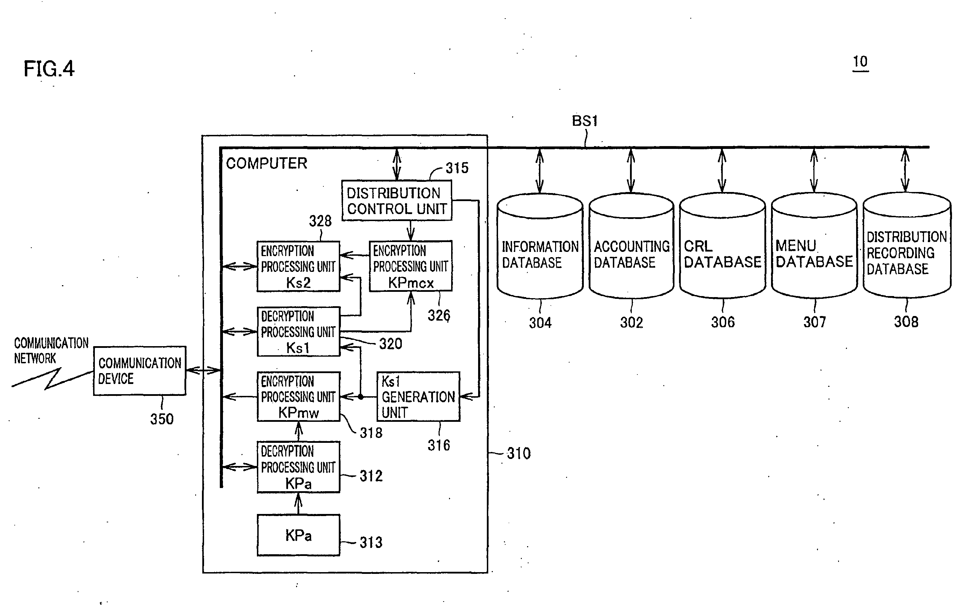

Fig. 4 is a schematic block diagram showing the configuration of distribution server 10 shown in Fig. 1.

Distribution server 10 includes an information database 304 for holding to-be-distributed information such as the encrypted data obtained by encrypting contents data in accordance with a predetermined system and the content ID, an accounting database 302 for holding accounting information according to the distribution of the contents data for each user of the personal computer, a CRL database 306 for administrating certificate revocation list CRL, a menu database 307 for holding the menu of the contents data held in information database 304, a distribution recording database 308 for holding the recording of distribution processing including transaction ID for each distribution from the start to the end of the distribution processing of the encrypted contents data and the license, a data processing unit 310 which receives data from information database 304, accounting database 302, CRL database 306, menu database 307 and distribution recording database 308 through a bus BS 1 and performs predetermined processing, and a communication device 350 for exchanging data between a distribution carrier (not shown) and data processing unit 310 through a communication network.

Data processing unit 310 includes a distribution control unit 315 controlling the operation of data processing unit 310 in accordance with the data on bus BS1, a session key generation unit 316 controlled by distribution control unit 315 and generating session key Ks1 at the time of a distribution session, an authentication key holding unit 313 holding a public authentication key for decrypting authentication data {KPmw//Cmw}KPa transmitted from the license administration module for authentication, a decryption processing unit 312 receiving authentication data {KPmw//Cmw}KPa through communication device 350 and bus BS1 and performing decryption processing using public authentication key KPa from authentication key holding unit 313, an encryption processing unit 318 encrypting session key Ks1 generated by session key generation unit 316 using class public encryption key KPmw obtained by decryption processing unit 312 and outputting encrypted session key Ks1 to bus BS1, and a decryption processing unit 320 receiving the data that is encrypted with session key Ks1 and transmitted from bus BS1, and performing decryption processing.

Data processing unit 310 further includes an encryption processing unit 326 encrypting the license given from distribution control unit 315, with public encryption key KPmcx of the license administration module obtained by decryption processing unit 320 and an encryption processing unit 328 further encrypting the output of encryption processing unit 326 with session key Ks2 given from decryption processing unit 320 and outputting the encrypted output to bus BS1.

The operation of distribution server 10 in each distribution session will be described later in detail based on a flow chart.

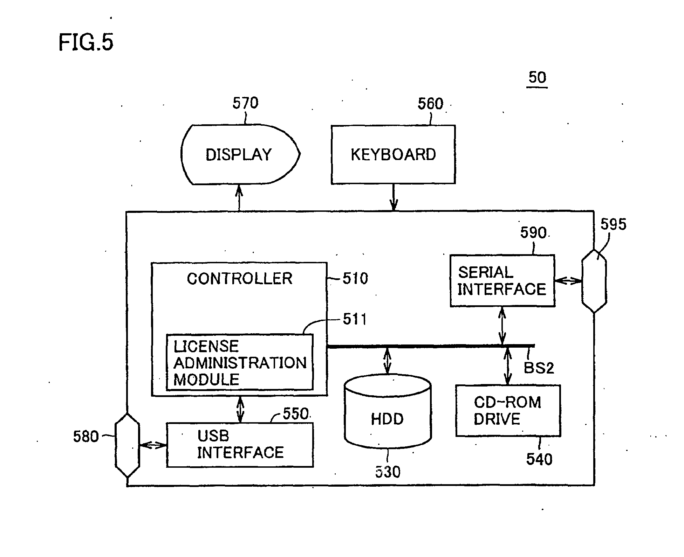

Fig. 5 is a schematic block diagram for describing the configuration of personal computer 50 shown in Fig. 1. Personal computer 50 includes a bus BS2 allowing the respective units of personal computer 50 to exchange data, and a controller 510 controlling the exchange of data between personal computer 50 and distribution server 10 so as to receive the encrypted contents data and the like from distribution server 10 through Internet network 30 and executing license administration module 511 that is a program for protecting contents. License administration module 511 acquires music data from a music CD through a CD-ROM drive 540 by ripping, generates a locally used license and encrypted contents data reproducible with the license, and controls license generation.

Further, license administration module 511 makes program exchange data when the encrypted contents data and the license are received from distribution server 10, and administrates a dedicated license generated from the received license.

Personal computer 50 also includes a hard disk (HDD) 530 which stores a program file for executing license administration module 511, a file recording the encrypted contents data or license administrated by license administration module 511, and a content list file administrating the encrypted contents data file and the corresponding license. The detail of the content list file will be described later.

Personal computer 50 further includes a USB interface 550 controlling the data exchange between controller 510 and a terminal 580 when the encrypted contents data and the license are transmitted and received to and from portable reproduction terminal 100, CD-ROM drive 540 acquiring music data from a music CD by ripping, a keyboard 560 inputting a user's instruction, a display 570 visually providing various types of information to the user, terminal 580 connecting USB cable 550 , a serial interface 590 for connecting personal computer 50 to modem 40, and a terminal 595 which is a physical boundary located between serial interface 590 and modem 40.

As can be seen, personal computer 50 includes therein license administration module 511 for receiving the encrypted contents data and the license from distribution server 10 through Internet network 30, and CD-ROM drive 540 for acquiring the encrypted contents data and the license from the music CD by ripping.

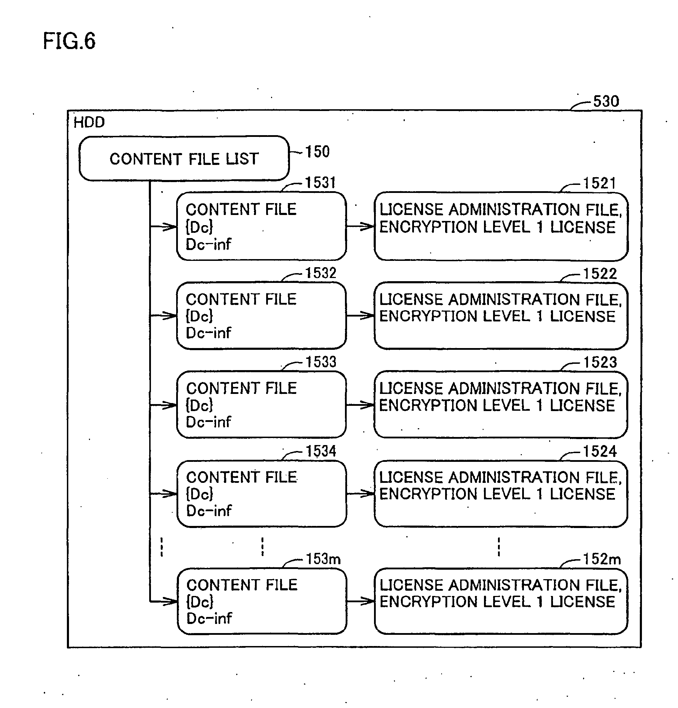

Referring to Fig. 6, the administration of the encrypted contents data and the license by license administration module 511 in personal computer 50 will be described. HDD 530 of personal computer 50 records a content list file 150. Content list file 150 is a data file in the form of the list of owned contents, and includes information indicating the content file and license administration file for each content. Content files 1531 to 153m are files recording encrypted contents data {Dc}Kc and additional information Dc-inf which license administration module 511 receives from distribution server 10 and which is ripped from music CD 60, and provided for the respective contents. Further, license administration files 1521 to 152m are provided to correspond to content files 1531 to 153m, respectively. License administration files 1521 to 152m records an encryption level 1 license obtained by individually encrypting at least the license which license administration module 511 acquires from distribution server 10 by the distribution or from music CD 60 by ripping and the number of possible checkouts, and information (except for the license key) obtained by making a copy of part of the license in a plaintext form so as to be referred to before decrypting. "Individually encrypting" means encrypting the license and the number of possible checkouts while associating them with information that is obtained from personal computer 50 and that can specify personal computer 50 such as the number individual to controller (CPU) 510 of personal computer 50 or BIOS version number. Therefore, generated encryption level 1 license is individual to personal computer 50 and is meaningless to the other device even if being copied.

License administration module 511 is constituted to be able to select a content from the content file list and specify a content file and a license administration file corresponding to the selected content.

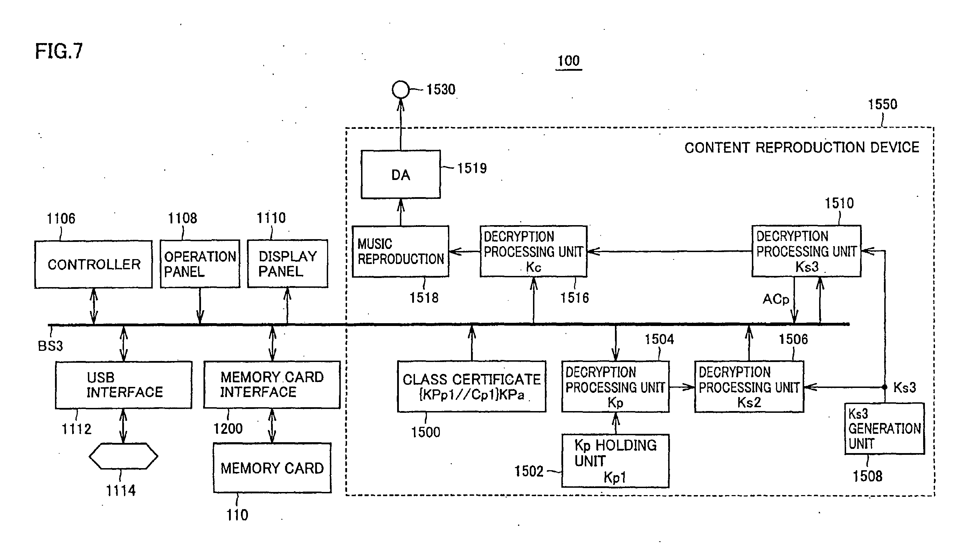

Fig. 7 is a schematic block diagram showing the configuration of portable reproduction terminal 100.

Portable reproduction terminal 100 includes a bus BS 3 for exchanging data among the respective units of portable reproduction terminal 100, a controller 1106 controlling the operation of portable reproduction terminal 100 through bus BS3, an operation panel 1108 for providing an external instruction to portable reproduction terminal 100, and a display panel 1110 for providing information output from controller 1106 and the like to the user of a mobile phone as visual information.

Portable reproduction terminal 100 also includes detachable memory card 110 storing and decoding contents data (music data) received from distribution server 10, a memory card interface 1200 controlling the exchange of data between memory card 110 and bus BS3, a USB interface 1112 controlling the exchange of data between bus BS3 and a terminal 1114 when portable reproduction terminal 100 receives the encrypted contents data and the license, terminal 1114 connecting USB cable 70, and a reproduction device 1550 decoding and reproducing encrypted contents data {Dc}Kc.

Reproduction device 1550 includes an authentication data holding unit 1500 holding authentication data {KPp1//Cp1}KPa encrypted into a state in which the legality of authentication data can be authenticated by decrypting class public encryption key KPp1 and class certificate Cp1 using public authentication key KPa. It is assumed herein that class y of reproduction device 1550 is 1 (y = 1).

Portable reproduction terminal 100 further includes a Kp 1 holding unit 1502 holding the class private decryption key of Kp1, and a decryption processing unit 1504 obtaining session key Ks2 obtained by decrypting data received from bus BS3 using Kp 1 and generated by memory card 110.

Reproduction device 1550 further includes a session key generation unit 1508 generating session key Ks3 for encrypting data exchanged between reproduction device 1550 and memory card 110 in a reproduction session for reproducing the contents data stored in memory card 110 by random numbers or the like, and an encryption processing unit 1506 encrypting session key Ks3 generated from session key generation unit 1508 using session key Ks2 obtained by decryption processing unit 1504 and outputting encrypted session key Ks3 to bus BS3 when reproduction device 1550 receives license key Kc and reproduction control information ACp from memory card 110 in the reproduction session of the encrypted content data.

Reproduction device 1550 further includes a decryption processing unit 1510 decrypting data on bus BS3 using session key Ks3 and outputting license key Kc and reproduction control information ACp, a decryption processing unit 1516 receiving encrypted contents data {Dc}Kc from bus BS3, decoding encrypted contents data {Dc}Kc using license key Kc acquired from decryption processing unit 1510, and outputting the contents data, a music reproduction unit 1518 receiving the output of decryption processing unit 1516 and reproducing the contents data, a DA converter 1519 converting the output of music reproduction unit 1518 from a digital signal into an analog signal, and a terminal 1530 for outputting the output of DA converter 1519 to an external output device (not shown) such as headphones 130.

It is noted that reproduction device 1550 consists of a tamper resistant module.

Portable reproduction terminal 100 shown in Fig. 1, which does not have a download function, exchanges data with personal computer 50 using USB cable 70. In case of the portable reproduction terminal which has a function of downloading the encrypted contents data or the license through a cellular phone network, i.e., a cellular phone integral type reproduction terminal, the portable reproduction terminal is constituted to includes an antenna for receiving a signal transmitted over radio by the cellular phone network, and a transmission-reception unit which receives the signal from the antenna and converts the signal into a base band signal, or which modulates data from the portable reproduction terminal and applies the modulated data to the antenna besides the constituent elements shown in Fig. 7.

The operations of the respective constituent elements of portable reproduction terminal 100 in each session will be described later in detail based on flow charts.

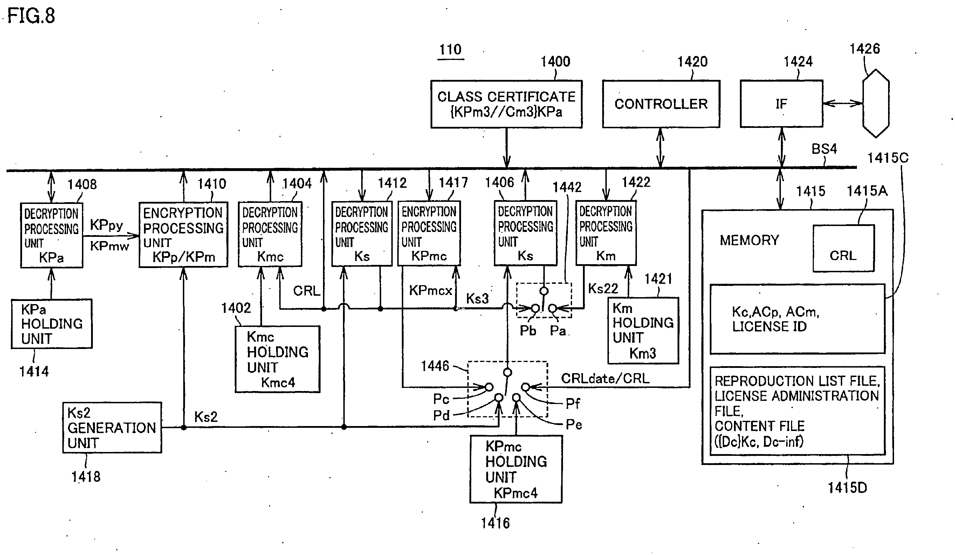

Fig. 8 is a schematic block diagram for describing the configuration of memory card 110.

As already described, the memory card is provided with class public encryption key KPmw, class decryption key Kmw, class certificate Cmw, individual public encryption key KPmcx, and individual decryption key Kmcx. It is assumed herein that these natural numbers w and x are 3 and 4, respectively (w = 3 and x = 4). Therefore, memory card 110 is provided with class public encryption key KPm3, class decryption key Km3, class certificate Cm3, individual public encryption key KPmc4, and individual decryption key Kmc4.

Accordingly, memory card 110 includes an authentication data holding unit 1400 holding authentication data {KPm3//Cm3}KPa, a Kmc holding unit 1402 holding the individual private decryption key of Kmc4 set for each memory card, a Km holding unit 1421 holding class decryption key Km3, and a KPmc holding unit 1416 holding individual public encryption key KPmc4 for performing encryption in a decryptable manner using individual decryption key Kmc4.

Thus, as will be obvious from the following description, it is possible to execute the administration of the license key for each memory card by providing the memory card, i.e., the secret key of the recording device.

Memory card 110 further includes an interface 1424 exchanging a signal with memory card interface through a terminal 1426, a bus BS4 exchanging a signal with interface 1424, a decryption processing unit 1422 receiving class decryption key Km3 from Km holding unit 1421 and outputting a session key Ks22 and the like generated by personal computer 50 in a checkout session and a checkin session to a contact Pa from the data applied to bus BS4 from interface 1424, a KPa holding unit 1414 decrypting authentication data and checks the validity of the authentication data, a decryption processing unit 1408 receiving public authentication key KPa from KPa holding unit 1414, executing decryption processing using public authentication key KPa to authentication data of the other device applied to bus BS4, outputting a decrypting result and an obtained class certificate to a controller 1420, and outputting the obtained class public key to an encryption processing unit 1410, and an encryption processing unit 1406 encrypting data selectively provided by a changeover switch 1446, and outputting the encrypted data to bus BS4.

Memory card 110 also includes a session key generation unit 1418 generating session key Ks2 in each of the checkout session, the checkin session, and the reproduction session, an encryption processing unit 1410 encrypting session key Ks2 output from session key generation unit 1418 using class public encryption key KPpy or KPmw obtained by decryption processing unit 1408 and outputs encrypted session key Ks2 to bus BS4, a decryption processing unit 1412 receiving encrypted data using session key Ks2 from bus BS4 and decrypts the data using session key Ks2 obtained from session key generation unit 1418, and an encryption processing unit 1417 encrypting the license read from a memory 1415 in a encrypted contents data reproduction session using individual public encryption key KPmcx of the other recording device (memory card or license administration unit) decrypted by decryption processing unit 1412.

Memory card 110 further includes a decryption processing unit 1404 decrypting the data, obtained by encrypting the data on bus BS4 using public encryption key KPmc4, using class private decryption key Kmc4 of memory card 110, and a memory 1415 receiving certificate revocation list CRL, encrypted contents data {Dc}Kc, licenses (Kc, ACp, ACm, license ID) for reproducing encrypted contents data {DC}Kc, additional information Dc-inf, an encrypted contents data reproduction list, and the license administration files for administrating licenses from bus BS4, and stores them. Memory 1415 consists of, for example, a semiconductor memory device. Further, memory 1415 consists of a CRL region 1415A, which cannot be directly accessed from the outside, recording certificate revocation list CRL, a license region 1415C recording licenses, and a data region 1415D, which can be directly accessed from the outside, recording the content files, the license administration files and a reproduction list file. Each content file includes encrypted contents data {DC}Kc and additional information Dc-inf on the encrypted contents data.

Further, memory card 110 includes a controller 1420 controlling the exchange of data between memory card 110 and the outside through bus BS4 and receiving the class certificate, access control information and the like from bus BS4, and controlling the operation of memory card 110.

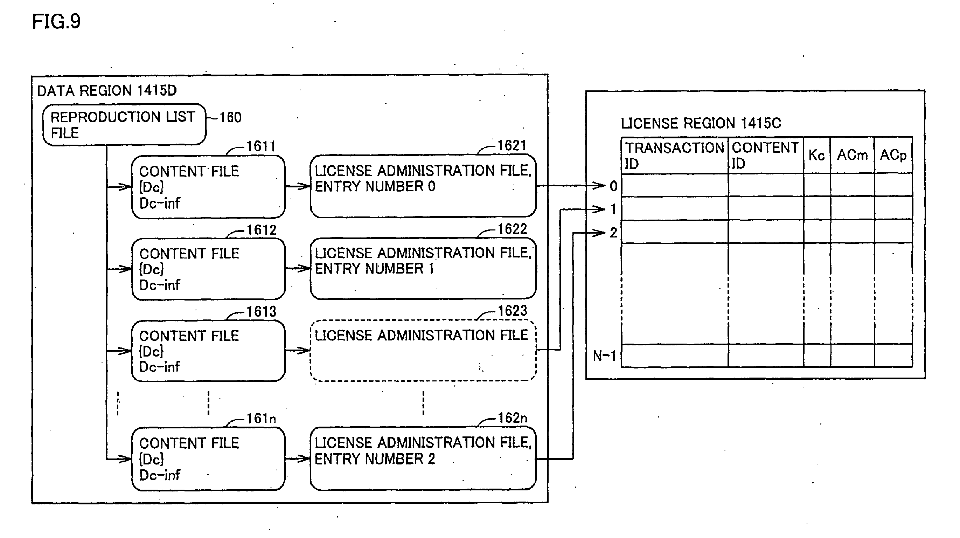

Fig. 9 shows data administration in memory 1415 of memory card 110. In memory card 110, one license (transaction ID, content ID, license key Kc, access control information ACm and reproduction control information ACp) is recorded in one entry designated by one of entry numbers 0, 1, 2, ... and N-1 in license region 1415C, and a reproduction list file 160, content files 1611 to 161n and license administration files 1621 to 162n are recorded in data region 1415D.

Reproduction list file 160 is a list in the form of the list of contents recorded on memory card 110, and has a structure which enables specifying a content file and a license administration file corresponding to each list.

Content files 1611 to 161n are files in which encrypted contents data {Dc}Kc and additional information Dc-inf are recorded, respectively. License administration files 1621 to 162n are files in which information on the licenses corresponding to content files 1611 to 161n are recorded, respectively, and in which the copies of part of the licenses obtained in plaintext such as content ID and transaction ID, and entry numbers recording the licenses, respectively. This indicates that the content file for which there is no corresponding license administration file, does not have a. license.

The portable reproduction terminal provided with memory card 110 reproduces contents in order of the list in accordance with reproduction list file 160. It is assumed herein that content files 1611 to 161n are listed in this order in content reproduction list file 160. For example, if the first song is to be reproduced, content file 1611 of the to-be-reproduced song and file administration file 1621 corresponding to content file 1611 are specified. Entry number "0" in license administration file 1621 is read. Based on the read entry number "0", the license recorded in a region designated by entry number "0" in license region 1415C is read, and the encrypted contents data is decrypted and reproduced.

If the third song is designated, it is possible to specify in reproduction list file 160 that license administration file 1623 corresponding to content file 1613 is not recorded in data region 1415D and possible to easily determine that the third song cannot be reproduced.

Respective session operations in the data distribution system shown in Fig. 1 will be described.

### [Distribution]

First, an operation for distributing the encrypted contents data and the license from distribution server 10 to license administration module 511 of personal computer 50 in the data distribution system shown in Fig. 1, will be described. This operation is also referred to as "distribution session".

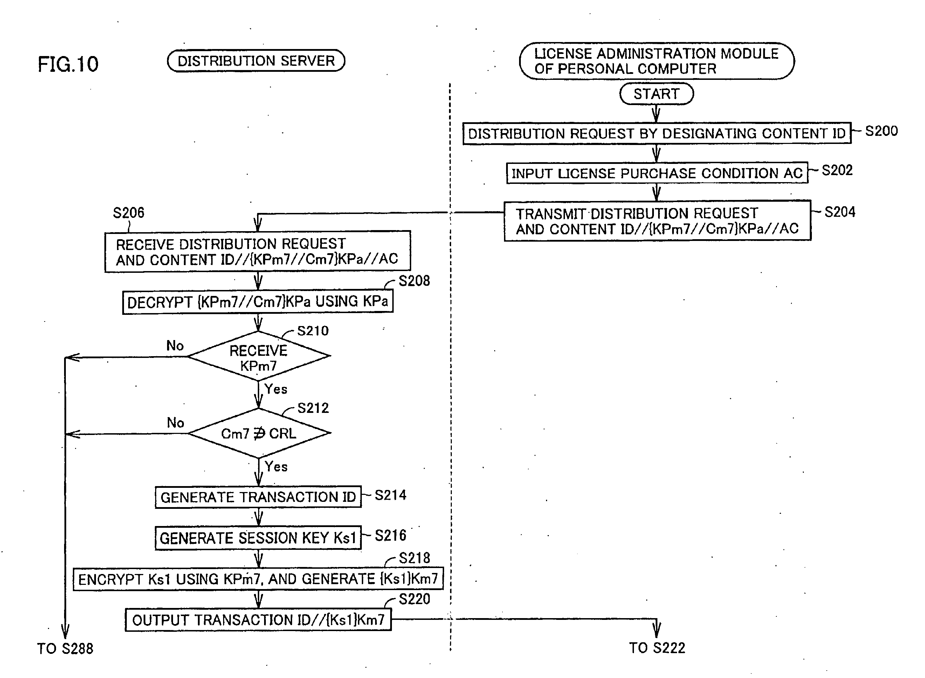

Figs. 10 to 13 are first to fourth flow charts, respectively for describing a distribution operation for distributing the encrypted contents data and the license to license administration module 511 included in personal computer 50 which operation occurs when the encrypted contents data is purchased in the data distribution system shown in Fig. 1. It is noted that license administration module 511 includes an execution program for receiving the encrypted contents data and the license from distribution server 10. In addition, license administration module 511, similarly to the memory card, is provided with class encryption key KPmw, class private decryption key Kmw, class certificate Cmw, individual public encryption key KPmcx and individual private decryption key Kmcx. It is assumed herein that these natural numbers w and x are 7 and 8, respectively (w = 7 and x = 8). Therefore, license administration module 511 holds class encryption key KPm7, class private decryption key Km7, class certificate Cm3, individual public encryption key KPmc8 and individual private decryption key Kmc8.

It is premised that before the processing of Fig. 10, the user of personal computer 50 connects personal computer 50 to distribution server 10 through modem 40, and acquires a content ID for a content that the user wants to purchase.

Referring to Fig. 10, the user of personal computer 50 issues a distribution request based on the designation of the content ID through keyboard 560 (step S200). A purchase condition AC for purchasing the license of encrypted contents data is input through keyboard 560 (step S202). Namely, in order to purchase license key Kc for decrypting selected encrypted contents data, access control information ACm and reproduction restriction information ACp on the encrypted contents data are set and purchase condition AC is input.

If purchase condition AC for the encrypted contents data is input, controller 510 reads authentication data {KPm7//Cm7}KPa from license administration module 511, and transmit the content ID, license purchase condition data AC and the distribution request in addition to read authentication data {KPm7//Cm7}KPa to distribution server 10 (step S204).

Distribution server 10 receives the distribution request, the content ID, authentication data {KPm7//Cm7}KPa and license purchase condition data AC (step S206), executes decryption processing to the authentication data output from license administration module 511 using public authentication key KPa in decryption processing unit 312 (step S208).

Distribution control unit 315 performs authentication processing for determining whether or not the authentication data encrypted by a valid institution to demonstrate the validity of the data has been received based on the decryption processing result of decryption processing unit 312 (step S210). If it is determined that the data is valid authentication data, distribution control unit 315 approves and accepts public encryption key KPm7 and certificate Cm7. The operation moves to the next processing (step S212). If it is not determined that the data is valid authentication data, distribution control unit 315 finishes processing without accepting public encryption key KPm7 and certificate Cm7 (step S288).

If receiving public encryption key KPm7 and certificate Cm7 as a result of authentication, distribution control unit 315 refers to CRL database 306 to determine whether class certificate Cm7 of license . administration module 511 is listed in certificate revocation list CRL, and the distribution session ends at this point if the class certificate is in the certificate revocation list (step S288).

On the other hand, if class certificate Cm7 of license administration module 511 is not listed in certificate revocation list CRL, the operation moves to the next processing (step S214).

If it is confirmed after the authentication that access is from the personal computer including the license administration module having valid authentication data and the certificate of the module does not belong to certificate revocation list CRL, distribution control unit 315 of distribution server 10 generates a transaction ID which is a administration code for specifying distribution (step S214). In addition, session key generation unit 316 generates session key Ksl for the distribution (step S216). Session key Ks1 is encrypted by encryption processing unit 318 using public encryption key KPm7 corresponding to license administration module 511 and obtained by decryption processing unit 312 (step S218).

The transaction ID and encrypted session key Ks1 is output as a transaction ID //{Ks1}Km7 to the outside through bus RS1 and communication device 350 (step S220).

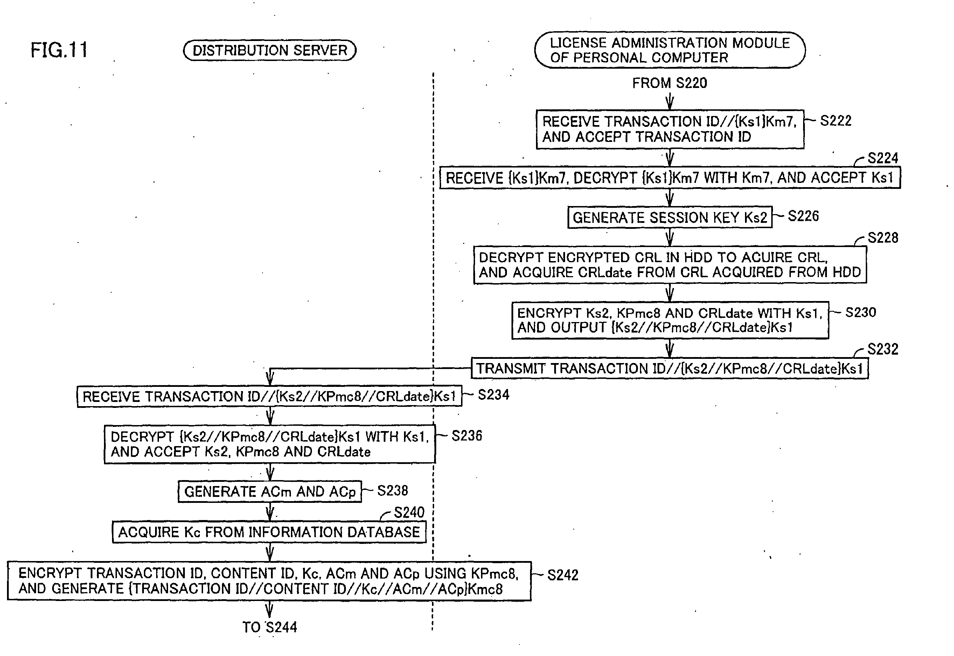

Referring to Fig. 11, if controller 510 of personal computer 50 receives transaction ID //{Ks1}Km7 (step S222), license administration module 511 receives and decrypts encrypted data {Ks1}Km7, and accepts session key Ks1 (step S224).

If confirming the acceptance of session key Ks1 generated in distribution server 10, license administration module 511 generates session key Ks2 (step S226). Controller 510 then read encrypted CRL encrypted so as to be able to be decrypted only by license administration module 511 and recorded on HDD 530 through bus BS2, and license administration module 511 decrypts encrypted CRL, acquires certificate revocation list CRL, and acquires update date data CRLdate from decrypted certificate revocation list CRL (step S228). License administration module 511 also decrypts, as one data string, session key Ks2 generated therein, individual public encryption key KPmc8 and update date data CRLdate using session key Ks1 generated in distribution server 10, and outputs encrypted data {Ks2//KPmc8//CRLdate}Ks1 (step S230).

Controller 510 transmits transaction ID //{Ks2//KPmc8//CRLdate}Ks1 obtained by adding the transaction ID to encrypted data {Ks2//KPmc8//CRLdate}Ks1 to distribution server 10 (step S232).

Distribution server 10 receives transaction ID //{Ks2//KPmc8//CRLdate}Ks1 (step S234), executes decryption processing using session key Ks1 in decryption processing unit 430, and accepts session key Ks2 generated in license administration module 511, individual public encryption key KPmc8 of license administration module 511, and update date data CRLdate on the certificate revocation list in license administration module 511 (step S236).

Distribution control unit 315 generates access control information ACm and reproduction control information ACp in accordance with the content ID and license purchase condition AC acquired in step S206 (step S238). Further, distribution control unit 315 acquires license key Kc for decrypting the encrypted contents data from information database 304 (step S240).

Distribution control unit 315 provides the generated license, i.e., the transaction ID, the content ID, license key Kc, reproduction control information ACp and access control information ACm to encryption processing unit 326. Encryption processing unit 326 encrypts the license using individual public encryption key KPmc8 of license administration module 511 obtained by decryption processing unit 320 and generates encrypted data {transaction ID//content ID// Kc//ACm//ACp}Kmc8 (step S242).

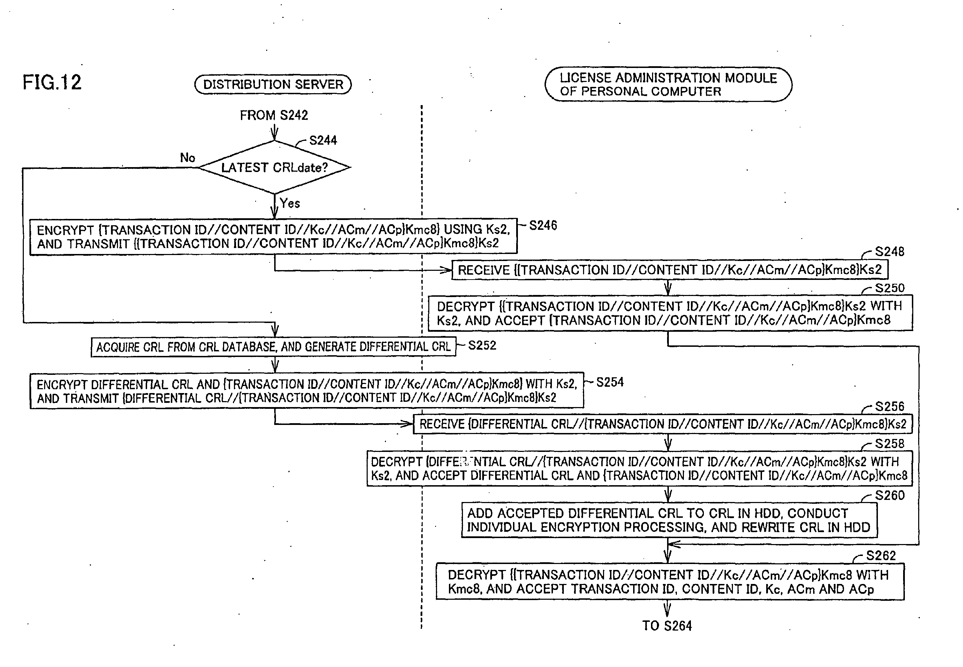

Referring to Fig. 12, distribution server 10 determines whether or not certificate revocation list CRL administrated by license administration module 511 is the latest list based on update date data CRLdate transmitted from license administration module 511, and the operation moves to step S246 if it is determined that certificate revocation list CRL is the latest list based on update date data CRLdate. If it is determined that certificate revocation list CRL is not the latest list based on update date data CRLdate, the operation moves to step S252 (step S244).

If distribution server 10 determines that certificate revocation list CRL is the latest list based on update date data CRLdate, encryption processing unit 328 encrypts encrypted data {transaction ID//content ID// Kc//ACm//ACp}Kmc8 output from encryption processing unit 326 using session key Ks2 generated by license administration module 511, and outputs encrypted data {{transaction ID//content ID// Kc//ACm//ACp}Kmc8}Ks2 to bus BS 1. Distribution control unit 315 then transmits encrypted data {{transaction ID//content ID// Kc//ACm//ACp}Kmc8}Ks2 on bus BS1 to personal computer 50 through communication device 350 (step S246).

Controller 510 of personal computer 50 receives encrypted data {{transaction ID//content ID// Kc//ACm//ACp}Kmc8}Ks2 (step S248), license administration module 511 decrypts encrypted data {{transaction ID//content ID// Kc//ACm//ACp}Kmc8}Ks2 using session key Ks2, and accepts encrypted data {transaction ID//content ID// Kc//ACm//ACp}Kmc8 (step S250). Thereafter, the operation moves to step S262.

Meanwhile, if distribution server 10 determines that certificate revocation list CRL is not the latest list based on update date data CRLdate, distribution control unit 315 acquires latest certificate revocation list CRL from CRL database 306 through bus BS1 and generates differential CRL which is differential data (step S252).

Encryption processing unit 328 receives the output of encryption processing unit 326 and differential CRL supplied from distribution control unit 315 through bus BS1, and encrypts the received data using session key Ks2 generated by license administration module 511. Encrypted data {differential CRL//{transaction ID//content ID//Kc//ACm//ACp}Kmc8}Ks2 output from encryption processing unit 328 is transmitted to personal computer 50 through bus BS1 and communication device 350 (step S254).

Personal computer 50 receives encrypted data {differential CRL//{transaction ID//content ID//Kc//ACm//ACp}Kmc8}Ks2 transmitted from distribution server 10 (step S256), and license administration module 511 decrypts the received data using session key Ks2, and accepts differential CRL and encrypted data {transaction ID//content ID//Kc//ACm//ACp}Kmc8 (step S258).

Controller 510 adds accepted differential CRL to certificate revocation list CRL recorded on HDD 530 to thereby generate encrypted CRL which is subjected to individual encryption processing, and rewrites encrypted CRL recorded in HDD 530 to encrypted CRL thus generated (step S260).

Steps S246, S248 and S250 are distribution procedures for distributing license key Kc and the like to license administration module 511 if certificate revocation list CRL administrated by license administration module 511 is the latest list, whereas steps S252, S254, S256, S258 and S260 are distribution procedures for distributing license key Kc and the like to license administration module 511 if certificate revocation list CRL administrated by license administration module 511 is not the latest list. In this way, based on the update date when certificate revocation list CRL was updated, transmitted from license administration module 511, it is checked whether or not certificate revocation list CRL administrated by license administration module 511 is updated to the latest list one by one. If CRL is not updated to the latest list, latest certificate revocation list CRL is acquired from CRL database 306 and differential CRL is distributed to license administration module 511, whereby it is possible to the license distributed to the license administration module from being output to the memory card, the content reproduction device or the like to which the secret key is leaked from the license administration module which receives the distribution.

After step S250 or S260, encrypted license {transaction ID//content ID// Kc//ACm//ACp}Kcm8 is decrypted using individual private decryption key Kmc8, and the license (license key Kc, the transaction ID, the content ID, access control information ACm and reproduction control information ACp (step S262).

In this way, the encryption keys generated in the distribution server and the license administration module are exchanged therebetween, and the distribution server and the license administration module execute encryption using the mutually received encryption keys and transmit the encrypted data to the other party, whereby it is possible to perform substantially mutual authentication in the transmission and reception of the encrypted data and to improve the security of the data distribution system.

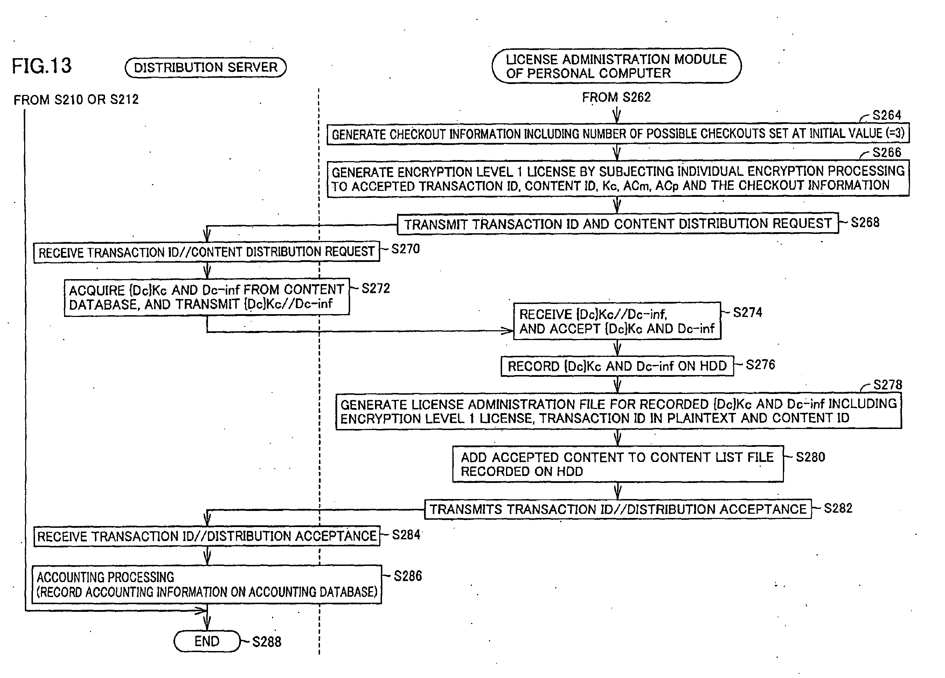

Referring to Fig. 13, license administration module 511 generates checkout information including the number of possible checkouts for lending out, the encrypted contents data and the license received from distribution server 10 to the other devices (step S264). In this case, the initial value of the possible checkout number is set at "3". Thereafter, license administration module 511 generates an encryption level 1 license by subjecting individual encryption processing to the accepted transaction ID, content ID, license key Kc, access control information ACm, reproduction restriction information ACp and the generated checkout information (step S266). In this case, license administration module 511 performs encryption while associating the accepted data and the generated checkout information with information, such as the number individually held by controller (CPU) 510 of personal computer 50 and version information, on BIOS which is obtained from personal computer 50 and which can specify personal computer 50. Accordingly, the generated encryption level 1 license becomes an individual license to personal computer 50. Even if the license is copied, the license is insignificant to the other device. Unless using the checkout to be described later, the data cannot be reproduced even if the encrypted contents data is transmitted together with the encrypted contents data to the other device.

Controller 510 of personal computer 50 transmits the transaction ID transmitted from distribution server 10 and a distribution request of an encrypted contents data to distribution server 110 (step S268).

Distribution server 10 receives the transaction ID and the distribution request of the encrypted contents data (step S270), acquires encrypted contents data {Dc}Kc and additional information Dc-inf from information database 304, and outputs these pieces of data through bus BS1 (step S272).

Personal computer 50 receives {Dc}Kc//Dc-inf, and accepts encrypted contents data {Dc}Kc and additional information Dc-inf (step S274). Then, controller 510 records encrypted contents data {Dc}Kc and additional information Dc-inf on HDD 530 through bus BS2 (step S276). In addition, controller 510 generates a license administration file for the encryption level 1 license generated by license administration module 511, encrypted contents data {Dc}Kc including the transaction ID and the content ID in plaintext, and additional information Dc-inf, and records the license administration file on HDD 530 through bus BS2 (step S278). Further, controller 510 adds the name of the received content to the content list file recorded on HDD 530 (step S280), and transmits the transaction ID and distribution acceptance to distribution server 10 (step S282).

When receiving transaction ID//distribution acceptance (step S284), distribution server 10 stores accounting data in accounting database 302, records the transaction ID on distribution recording database 308, and executes distribution end processing (step S286), thus finishing the entire processings (step S288).

As can be seen, license administration module 511 exchanges data with distribution server 10 in a software-like manner, and receives the encrypted contents data and the license from distribution server 10 in a software-like manner.

### [Ripping]

The user of personal computer 50 can not only acquire the encrypted contents data and the license by distribution but also acquire and use music data from a music CD owned by the user. From the viewpoints of the protection of the right of the copyright owner, it is not preferable to freely, digitally copy the music CD. However, it is permitted to copy a music CD using a tool having a copyright protection function and to enjoy music for an individual to use the CD for oneself. To this end, license administration module 511 also includes a program which realizes a ripping function of acquiring music data from a music CD, and generating encrypted contents data and a license that can be administrated by license administration module 511.

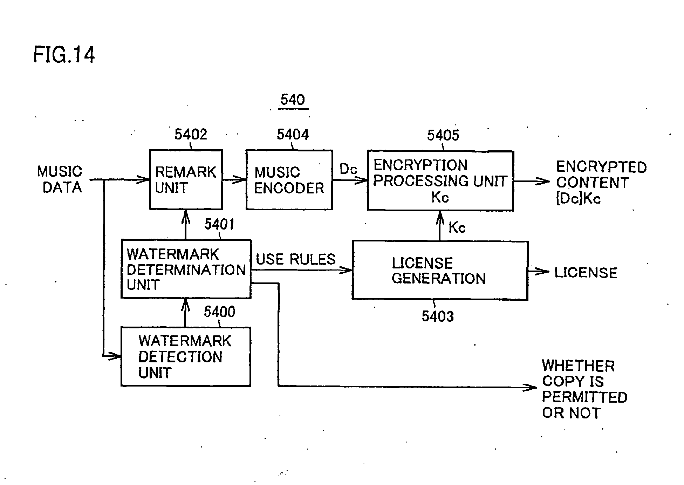

Referring to Fig. 14, if CD ripping is represented by functional blocks, it consists of a watermark detection unit 5400, a watermark determination unit 5401, a remark unit 5402, a license generation unit 5403, a music encoder 5404 and an encryption processing unit 5405.

Watermark detection unit 5400 detects a watermark buried in the music data from the music CD. Watermark determination unit 5401 determines whether or not watermark detection unit 5400 has detected the watermark, and reads use rules from a detection result if the watermark is detected. The use rules are considered to include, for example, whether to permit copy, copied generation administration information, local code, the maximum number of possible checkouts and the like. It is assumed herein that only Never-Copy (prohibition of copy), Copy-Once (permission of one generation copy), Free (permission of copy) and licenses which can be checked out are described in the rules.

In this case, if there are rules for the use of watermark, watermark determination unit 5401 determines whether or not ripping can be performed from a copy condition, and finishes processing if ripping is prohibited. In addition, watermark determination unit 5401 determines whether or not there is a change in the use rule and provides the other use rules to remark unit 5402 and license generation unit 5403. If no watermark is detected or if the watermark is detected but there is no instruction by the rules, watermark determination unit 5401 determines that copy condition is Copy-Once and the maximum number of checkouts of 3.

If the determination result of watermark determination unit 5401 is detected by the use rules and the rules include Copy-Once, remark unit 5402 replaces the watermark included in the music data by a watermark in which Copy-Once in the rules for the use of music data is changed.

License generation unit 5403 generates a license based on the use rules from watermark determination unit 5401. Music encoder 5404 encodes the music data the watermark of which is replaced by another watermark by remark unit 5402 according to a predetermined method. Encryption processing unit 5405 encrypts the music data from music encoder 5404 using license key Kc generated by license generation unit 5403.

As can be seen, the ripping is to generate the encrypted contents data and the license from the music data obtained from CD-ROM drive 540 and recorded on music CD 60.

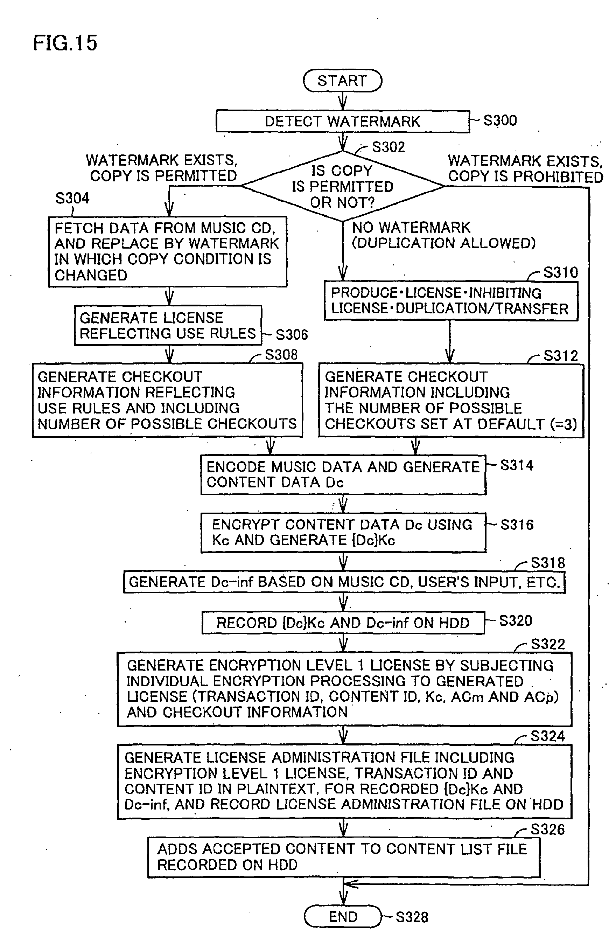

Referring to Fig. 15, the ripping operation in license administration module 511 will be described. When the ripping operation starts, watermark detection unit 5400 detects a watermark based on the data detected from music CD 60 (step S300). Watermark determination unit 5401 determines whether or not what is detected by watermark detection unit 5400 can be detected as a watermark and, if it can be detected, determines whether or not copy is permitted based on the use rules recorded as the watermark (step S302). If copy is permitted in the use rules recorded as the watermark, ripping can be performed. If so, the operation moves to step S304. If copy is prohibited in the use rules recorded as the watermark, the operation moves to step S328 in which the ripping operation is finished. If no watermark is detected from installed music CD 60, watermark determination unit 5401 determines that copy is permitted once and the operation moves to step S310.

In step S302, music data is fetched from music CD 60. If the copy condition is Copy-Once, remark unit 5402 replaces the copy condition among the use rules recorded by the watermark included in the music data by a watermark in which the use condition is changed to Never-Copy (step S304). License generation unit 5403 generates a license which reflects the use rules (step S306). That is, license generation unit 5403 generates copy-free access control information ACm if the copy condition is Free. Further, license generation unit 5403 generates license key Kc by random numbers, and generates a license ID according to present fixed rules. The generation rules for the license ID are set so as to be able to discriminate the license ID from the distribution-based license ID. As for other access control information ACm and reproduction restriction information ACp, it is assumed to set defaults, respectively. For example, the default of the reproducible frequency of access control information ACm is limitless. The default of the reproduction time limit of reproduction restriction information ACp is limitless, that of the reproduction range restriction of ACp is entire range, and that of the reproduction rate change restriction of ACp is no change, reproduction range or the like.

Thereafter, license generation unit 5403 generates checkout information which reflects the maximum number of possible checkouts if it is designated in the use rules or which includes the number of possible checkouts set at a default (= 3) if not designated (step S308).

On the other hand, if what is detected by watermark detection unit 5400 cannot be detected as a watermark, license generation unit 5403 generates a license according to defaults, i.e., a license which prohibits the copy and shift of the license (step S310). License generation unit 5403 then generates checkout information including the number of possible checkouts set at a default of 3 (step S312).

After step S308 or S312, music encoder 5404 encodes the music data having the watermark remarked according to a predetermined method to generate contents data Dc (step S314). Encryption processing unit 5405 encrypts contents data Dc from music encoder 5404 using license key Kc generated by license generation unit 5403, and generates encrypted contents data {Dc}Kc (step S316). Thereafter, additional information Dc-inf on contents data Dc is generated based on the information included in music CD 60, by the user's input from keyboard 560 of personal computer or the like (step S318).

Consequently, license administration module 511 which operates on controller 510 of personal computer 50 acquires encrypted contents data {Dc}Kc and additional information Dc-Inf through bus BS2 and records acquired encrypted contents data {Dc}Kc and additional information Dc-inf on HDD 530 (step S322). License administration module 511 generates an encryption level 1 license by subjecting individual encryption processing to the generated license (transaction ID, content ID, license key Kc, access control information ACm and reproduction restriction information ACp) and the checkout information (step S322). Thereafter, license administration module 511 generates a license administration file, which includes the encryption level 1 license as well as the transaction ID and content ID in plaintext, for encrypted contents data {Dc}Kc and additional information Dc-inf recorded on HDD 530, and records the license administration file on HDD 530 (step S324). Finally, license administration module 511 adds the file name of the accepted content to the content list file recorded on HDD 530 (step S326), thus finishing the ripping operation (step S328).

As can be seen, personal computer 50 can also acquire the encrypted contents data and the license by ripping. The encrypted contents data and the license acquired by ripping are handled similarly to the encrypted contents data and the license which license administration module 511 receives from distribution server 10.

### [Checkout]

If no license can be fetched under the administration of license administration module 511, contents data can be reproduced only by the reproduction function of license administration module 511, which is against the concept of the data distribution system which permits free copy of contents data while protecting the copyright thereof and which does not improve user's convenience. Further, the portable reproduction terminal which does not have a download function cannot acquire the encrypted contents data and the license. Considering them, the concept of checkout and checkin to be described hereafter enables the checkout (lending out,) of the encrypted contents data and the license from license administration module 511 to memory card 110.

Next, an operation for checking out the encrypted contents data and the license from license administration module 511 to memory card 110 attached to portable reproduction terminal 100 in the data distribution system shown in Fig. 1 will be described. This system uses a protection method which prohibits the reproduction of encrypted contents data as long as the data is not accompanied by a license, even if the encrypted contents data is copied. Therefore, it suffices to administer strictly the license by the license administration module 511 and to lend only the license for the checkout, and the encrypted contents data can be freely copied.

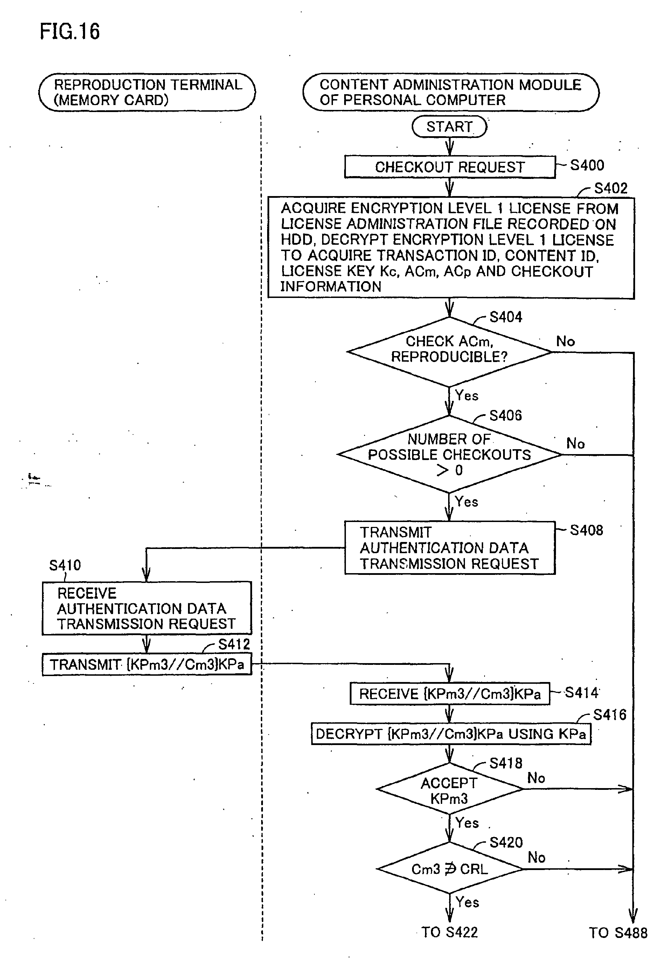

Figs. 16 to 19 are first to fourth flow charts, respectively for describing checkout operation for lending out, the encrypted contents data and the license which license administration module receives from distribution server 10 or which are acquired from music CD 60 by ripping, to memory card 110 attached to portable reproduction terminal 100 on condition of return. It is premised that before the processing of Fig. 16, the user of personal computer 50 determines a checkout target content and can specify a content file 153h (1 ≤ h ≤ m) and a license administration file 152h in accordance with the content file.

Further, at the time of checkout, license administration module 511 generates a license for changing the transaction ID and access control information ACm in the original license administrated as the license administration file for the checkout, and then checks out the generated license. The change of the transaction ID is conducted to discriminate the license from the original license administrated by license administration module 511. In addition, since the checkout is premised on return, the change of access control information ACm is conducted to prevent the checked-out license from being shifted from memory card 110 or being copied. In the following description, in order to discriminate a new transaction ID and new access control information ACm from the original transaction ID and access control information ACm, the new transaction ID and the new access control information ACm are referred to as "checkout transaction ID", and "checkout access control information ACm, respectively.

Referring to Fig. 16, when a checkout request is input from keyboard 560 of personal computer 50 (step S400), controller 510 acquires an encryption level 1 license which has been subjected to individual encryption from license administration file 152h recorded on HDD 530(see step S278 shown in Fig. 13). License administration module 511 decrypts encryption level 1 license to thereby acquire a license (transaction ID, content ID, license key Kc, access control information ACm and reproduction restriction information ACp) and checkout information (step S402).

License administration module 511 checks access control information ACm (step S404). That is, license administration module 511 checks whether the license to be checked out to memory card 110 attached to portable reproduction terminal 100 is a license with which the encrypted contents data cannot be reproduced due to access control information ACm based on access control information ACm thus obtained. If reproduction number of times is restricted by restriction by the reproducible time included in access control information ACm, this license is not checked out.

In step S404, if the number of times of reproducing the encrypted contents data is restricted by access control information ACm, the operation moves to step S488, finishing the checkout operation. In step S404, if the number of times of reproduction is not restricted by access control information ACm, the operation moves to step S406. License administration module 511 determines whether the number of possible checkouts included in the acquired checkout information is greater than "0" (step S406). In step S406, if the number of possible checkouts is "0", there is no checkout target license. Therefore, the operation moves to step S488, finishing the checkout operation. In step S406, if the number of possible checkout is greater than "0", license administration module 511 transmits an authentication data transmission request through USB interface 550, terminal 580 and USB cable 70 (step S408). Controller 1106 of portable reproduction terminal 100 receives the authentication data transmission request through terminal 1114, USB interface 1112 and bus BS3, and transmits the received authentication data transmission request to memory card 110 through bus BS3 and memory card interface 1200. Controller 1420 of memory card 110 receives the authentication data transmission request through terminal 1426, interface 1424 and bus BS4 (step S410).

When receiving the authentication data transmission request, controller 1420 reads authentication data {KPm3//Cm3}KPa from authentication data holding unit 1400 through bus BS4, and outputs read authentication data {KPm3//Cm3}KPa to portable reproduction terminal 100 through bus BS4, interface 1424 and terminal 1426. Controller 1106 of portable reproduction terminal 100 receives authentication data {KPm3//Cm3}KPa through memory card interface 1200 and bus BS3, and transmits authentication data {KPm3//Cm3}KPa to personal computer 50 through bus BS3, USB interface 1112, terminal 1114 and USB cable 70 (step S412).

Then, license administration module 511 of personal computer 50 receives authentication data {KPm3//Cm3}KPa through terminal 580 and USB interface 550 (step S414), and decrypts received authentication data {KPm3//Cm3}KPa with authentication key KPa (step S416). License administration module 511 performs authentication processing for determining whether or not the authentication data encrypted by a valid institution to demonstrate the validity of data has been received based on the decryption processing result (step S418). If it is determined that the authentication data is valid, license administration module 511 approves and accepts public encryption key KPm3 and certificate Cm3. The operation moves to the next processing (step S420). If the authentication data is not valid, license administration module 511 does not approve and accept public encryption key KPm3 and certificate Cm3, finishing.the operation (step S488).

If it is recognized as a result of authentication that the memory card is valid, license administration module 511 refers to HDD 530 to determine whether the identification code of class certificate Cm3 of memory card 110 is listed in certificate revocation list CRL, and finishes the checkout operation if the identification code of class certificate Cm3 of memory card 110 is listed in certificate revocation list CRL (step S488). If the identification code of class certificate Cm3 of memory card 110 is not listed in certificate revocation list CRL, the operation moves to the next processing (step S420).

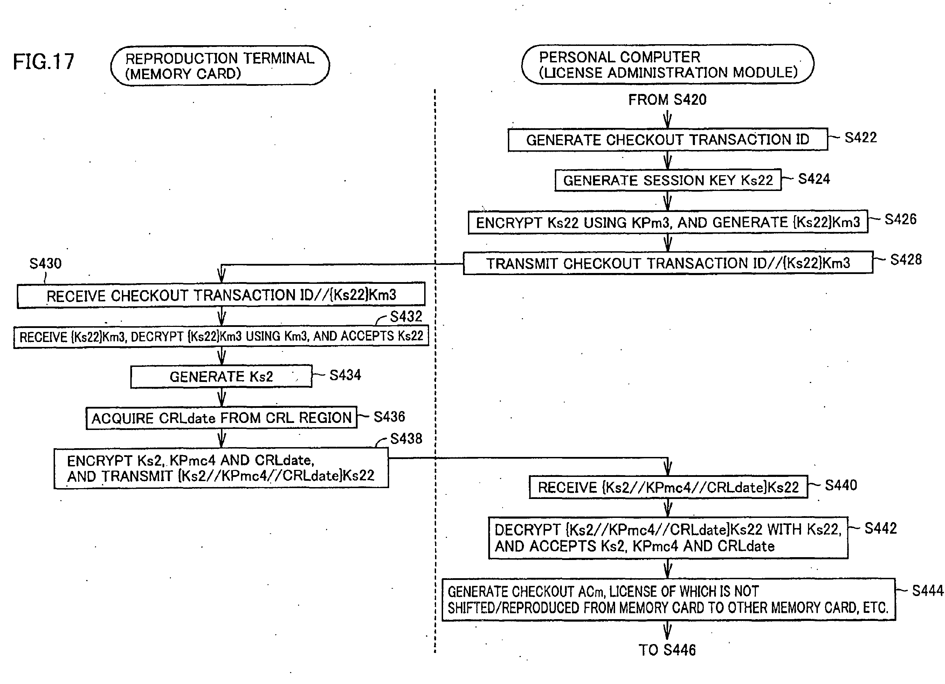

Referring to Fig. 17, when it is determined as a result of authentication that access is from the portable reproduction terminal including the memory card which holds valid authentication data and that the identification code of class certificate Cm3 is not listed in certificate revocation list CRL, license administration module 511 generates a checkout transaction ID which is a administration code for specifying the checkout (step S422). License administration module 511 generates a session key Ks22 for checkout (step S424), and encrypts session key Ks22 thus generated with class public encryption key KPm3 transmitted from memory card 110 (step S426). License administration module 511 transmits a checkout transaction ID //{Ks22}Km3 obtained by adding checkout transaction ID to encrypted data {Ks22}Km3 to portable reproduction terminal 100 through USB interface 550, terminal 580 and USB cable 70 (step S428). Then, controller 1106 of portable reproduction terminal 100 receives checkout transaction ID //{Ks22}Km3 through terminal 1114, USB interface 1112 and bus BS3, and transmit received checkout transaction ID //{Ks22}Km3 to memory card 110 through memory card interface 1200. Controller 1420 of memory card 110 receives checkout transaction ID //{Ks22}Km3 through terminal 1426, interface 1424 and bus BS4 (step S430). Decryption processing unit 1422 receives encrypted data {Ks22}Km3 from controller 1420 through bus BS4, decrypts encrypted data {Ks22}Km3 with class private decryption key Km3 from Km holding unit 1421, and accepts session key Ks22 (step S432). Session key generation unit 1418 generates session key Ks2 (step S434). Controller 1420 acquires update date data CRLdate on certificate revocation list CRL from CRL region 1415A of memory 1415 through bus BS4, and provides update date data CRLdate thus acquired to changeover switch 1446 (step S436).

If so, encryption processing unit 1406 encrypts session key Ks2, individual public encryption key KPmc4 of memory card 110 and update date data CRLdate acquired by sequentially switching the terminal of changeover switch 1446 with session key Ks22 decrypted by decryption processing unit 1404, and generates encrypted data {Ks2//KPmc4//CRLdate}Ks22. Controller 1420 outputs encrypted data {Ks2//KPmc4//CRLdate}Ks22 to portable reproduction terminal 100 through bus BS4, interface 1424 and terminal 1426, and controller 1106 of portable reproduction terminal 100 receives encrypted data {Ks2//KPmc4//CRLdate}Ks22 through memory card interface 1200. Controller 1106 transmits encrypted data {Ks2//KPmc4//CRLdate}Ks22 to personal computer 50 through USB interface 1112, terminal 1114 and USB cable 70 (step S438).

License administration module 511 of personal computer 50 receives encrypted data {Ks2//KPmc4//CRLdate}Ks22 through terminal 580 and USB interface 550 (step S440), decrypts encrypted data {Ks2//KPmc4//CRLdate}Ks22 thus received with session key Ks22, and accepts session key Ks2, individual public encryption key KPmc4 and update date data CRL date (step S442). License administration module 511 generates checkout access control information ACm which the license is not shifted/copied from memory card 110 attached to portable reproduction terminal 100 to the other memory card or the like (step S444).

The operation of steps S408 to S442 is for conforming that memory card 110 which checks out the encrypted contents data and the license is a valid memory card and for specifying memory card 110 which checks out the license. In other words, it is detected that authentication data {KPm3//Cm3}KPa can be decrypted with authentication key KPa, thereby confirming that memory card 110 is valid, and individual public encryption key KPmc4 inherent to each memory card is received from memory card 110, thereby specifying the memory card which checks out the license.

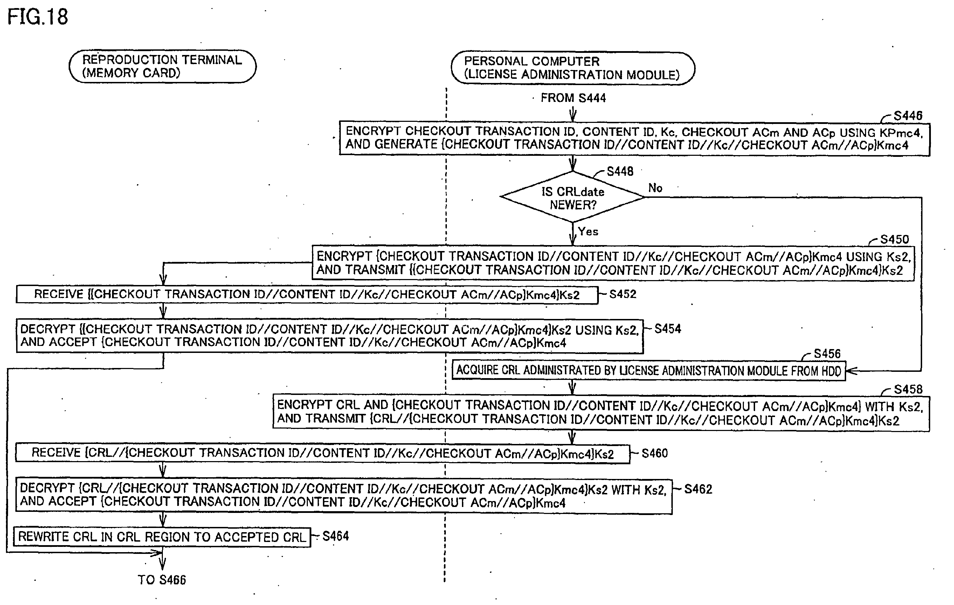

Referring to Fig. 18, license administration module 511 encrypts the license with individual public encryption key KPmc4 received in step S442 and inherent to memory card 110 to thereby generate encrypted data {checkout transaction ID//content ID//Kc//checkout ACm//ACp}Kmc4 (step S446). License administration module 511 determines whether or not certificate revocation list CRL of memory card 110 is newer than certification revocation list CRL administrated by license administration module 511 based on update date data CRLdate transmitted from memory card 110. When it is determined that certificate revocation list CRL of memory card 110 is newer than certification revocation list CRL administrated by license administration module 511, the operation moves to step S450. Conversely, when it is determined that certificate revocation list CRL administrated by license administration module 511 is newer, the operation moves to step S456 (step S448).

When it is determined based on update date data CRLdate that certificate revocation list CRL of memory card 110 is newer, license administration module 511 encrypts encrypted data {checkout transaction ID//content ID//Kc//checkout ACm//ACp}Kmc4, and transmits encrypted data encrypted data {{checkout transaction ID//content ID//Kc//checkout ACm//ACp}Kmc4}Ks2 to portable reproduction terminal through USB interface 550, terminal 580 and USB cable 70 (step S450).

Controller 1106 of portable reproduction terminal 100 receives encrypted data {{checkout transaction ID//content ID//Kc//checkout ACm//ACp}Kmc4}Ks2 through terminal 1114, USB interface 1112 and bus BS3, and transmit encrypted data {{checkout transaction ID//content ID//Kc//checkout ACm//ACp}Kmc4}Ks2 thus received to memory card 110 through bus BS3 and memory card interface 1200. Controller 1420 of memory card 110 receives encrypted data {{checkout transaction ID//content ID//Kc//checkout ACm//ACp}Kmc4}Ks2 through terminal 1426, interface 1424 and bus BS4 (step S452).

Decryption processing unit 1412 of memory card 110 receives encrypted data {{checkout transaction ID//content ID//Kc//checkout ACm//ACp}Kmc4}Ks2 through bus BS4, decrypts encrypted data {{checkout transaction ID//content ID//Kc//checkout ACm//ACp}Kmc4}Ks2 with session key Ks2 generated by session key generation unit 1418, and accepts encrypted data {checkout transaction ID//content ID//Kc//checkout ACm//ACp}Kmc4 (step S454). Thereafter, the operation moves to step

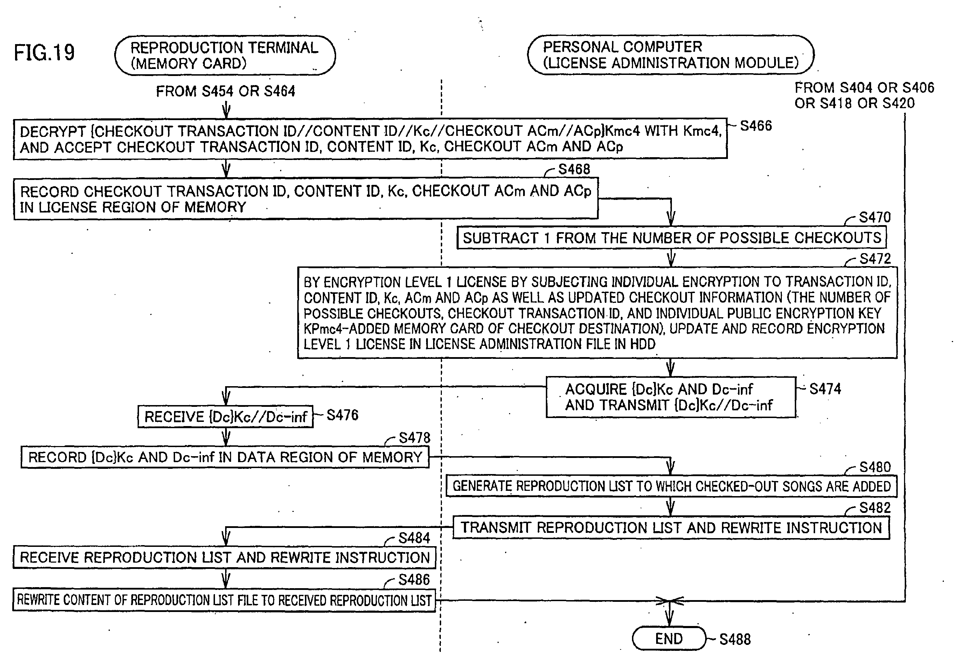

### S466 shown in Fig. 19.

On the other hand, when it is determined based on update date data CRLdate that certificate revocation list CRL of license administration module 511 is newer in step S448, license administration module 511 acquires certificate revocation list CRL administrated by the license administration module from HDD 530 (step S456).

License administration module 511 encrypts encrypted data {checkout transaction ID//content ID//Kc//checkout ACm//ACp}Kmc4 and certificate revocation list CRL acquired from HDD 530 with session key Ks2, and transmits encrypted data {CRL//{checkout transaction ID//content ID//Kc//checkout ACm//ACp}Kmc4}Ks2 to portable reproduction terminal 100 through USB interface 550, terminal 580 and USB cable 70 (step S458). Controller 1106 of portable reproduction terminal 100 receives encrypted data {CRL//{checkout transaction ID//content ID//Kc//checkout ACm//ACp}Kmc4}Ks2 through terminal 1114, USB interface 1112 and bus BS3, and outputs received encrypted data {CRL//{checkout transaction ID//content ID//Kc//checkout ACm//ACp}Kmc4}Ks2 to memory card 110 through bus BS3 and memory card interface 1200. Then, controller 1420 of memory card 110 receives encrypted data {CRL//{checkout transaction ID//content ID//Kc//checkout ACm//ACp}Kmc4}Ks2 through terminal 1426, interface 1424 and bus BS4 (step S460).

In memory card 110; decryption processing unit 1412 decrypts the received data on bus BS4 with session key Ks2 supplied from session key generation unit 1418, and accepts CRL and encrypted data {checkout transaction ID//content ID//Kc//checkout ACm//ACp}Kmc4 (step S460). Controller 1420 receives through bus BS4 certificate revocation list CRL accepted by decryption processing unit 1412, and rewrites CRL region 1415A of memory 1415 based on received certificate revocation list CRL (step S464).

Steps S450, S452 and S454 are operation procedures showing checkout of license key Kc and the like to memory card 110 when certificate revocation list CRL held by memory card 110 is newer than or the same as that administrated by license administration module 511, whereas steps S456, S458, S460, S462 and S464 are operation procedures showing checkout of license key Kc and the like to memory card 110 when certificate revocation list CRL held by memory card 110 is older than that administrated by license administration module 511. In this way, if the update date of certificate revocation list CRL held by memory card 110 is checked one by one based on update date data CRLdate transmitted from memory card 110 and license administration module 511 as a checkin source administrates newer certificate revocation list CRL, then the certificate revocation list held by memory card 110 is rewritten to that administrated by license administration module 511, thereby making it possible to prevent the license key from being provided to the other device, e.g., reproduction device 1550, which jeopardizes security from memory card 110. It is noted that checkout transaction ID, the content ID, license key Kc, checkout access control information ACm and reproduction restriction information ACp will be referred to as "lending license" as a whole.

Referring to Fig. 19, after step S454 or S464, encrypted license {checkout transaction ID//content ID//Kc//checkout ACm//ACp}Kmc4 is decrypted with private decryption key Kmc4 by decryption processing unit 1404 in response to an instruction of controller 1420, and the license (license key Kc, the checkout transaction ID, the content ID, checkout access control information ACm and reproduction restriction information ACp) is accepted (step S456). Controller 1420 records the checkout transaction ID, the content ID, license key Kc, checkout access control information ACm and reproduction restriction information ACp thus accepted on license region 1415C of memory 1415 through bus BS4 (step S468).

In this way, the encryption keys generated in license administration module 511 and memory card 110 are exchanged therebetween, and license administration module 511 and memory card 110 execute encryption using the mutually received encryption keys and transmit the encrypted data to the other party, whereby it is possible to perform substantially mutual authentication in the transmission and reception of the encrypted data and to improve security for the encrypted contents data and the license checkout operation.

License administration module 511 of personal computer 50 subtracts 1 from the number of possible checkouts (step S470), generates the encryption level 1 license by subjecting individual encryption to the transaction ID, the content ID, license key Kc, access control information ACm and reproduction restriction information ACp as well as updated checkout information (the number of possible checkouts, checkout transaction ID, and inherent public encryption key KPmc4 added to memory card 110 of the checkout destination), and rewrites encryption level 1 license in license administration file recorded on HDD 530 to the generated encryption level 1 license (step S472), In this way, by recording public encryption key KPmc4 received from memory card 110 and inherent to the memory card as part of checkout information on HDD 530, making it possible to easily specify the destination in the checkin of the encrypted contents data and the license.

License administration module 511 acquires encrypted contents data {Dc}Kc and additional information Dc-inf to be checked out to memory card 110 from content file 153h recorded on HDD 530, and transmits {Dc}Kc//Dc-inf to memory card 110 (step S474). Controller 1420 of memory card 110 receives {Dc}Kc//Dc-inf through portable reproduction terminal 100 (step S476), and records received {Dc}Kc//Dc-inf on data region 1415D of memory 1415 through bus BS4 (step S478).

If so, license administration module 511 of personal computer 50 generates a reproduction list to which songs checked out to memory card 110 are added (step S480), and transmits the reproduction list and a reproduction list rewrite instruction to memory card 110 (step S482). Controller 1420 of memory card 110 receives the reproduction list and the rewrite instruction through portable reproduction terminal 100 (step S484), and rewrites the content of reproduction list file 160 recorded on data region 1415D of memory 1415 to the received reproduction list through bus BS4 (step S486), finishing the checkout operation (step S488).

As can be seen, upon confirming that memory card 110 attached to portable reproduction terminal 100 is a valid device and that public encryption key KPm3 encrypted and transmitted together with class certificate Cm3 is effective, it is possible to check out the contents data only in response to a checkout request for the memory card class certificate Cm3 of which is not described in the certificate revocation list, i.e., which is not described in the class certificate list of the classes the encryption of which using public class encryption key KPm3 is violated, and to prohibit checkout to an invalid memory card and checkout using the broken class key. In addition, by using this checkout operation, even the user of portable reproduction terminal 100 which has no a function of downloading data from distribution server 10 can transmit the license acquired by personal computer 50 to memory card 110, thus improving user's convenience.

### [Checkin]

An operation for returning the encrypted contents data and the license checked out to memory card 110 from license administration module 511 of personal computer 50 to the state under the administration of license administration module 511 in the data distribution system shown in Fig. 1, will be described. This operation is referred to as "checkin".

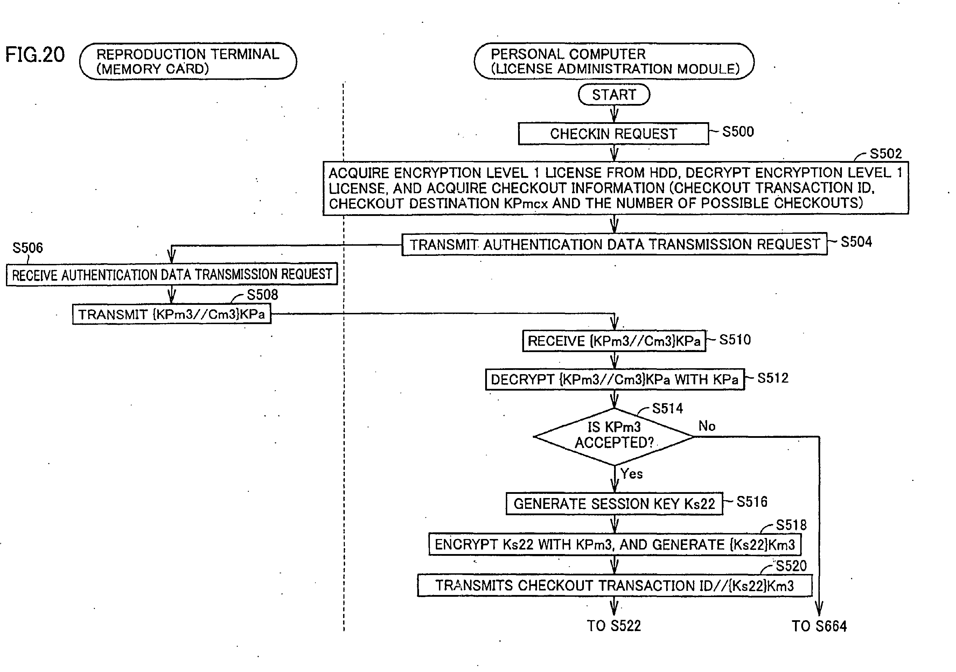

Figs. 20 to 27 are first to eighth flow charts, respectively, for describing checkin operation for allowing the user to return the license lent to memory card 110 by the checkout operation described with reference to Figs. 16 to 19.

It is premised that before the processing of Fig. 20, the user of personal computer 50 determines checkin target contents data based on reproduction list file 160 recorded on data region 1415D of memory card 110 attached to portable reproduction terminal 100 and content list file 150 recorded on HDD 530 of personal computer 50, and that a content file 161i (1 ≤ i ≤ n) in memory card 110 corresponding to the contents data, a license administration file 162i and license administration file 152j (1 ≤ j ≤ m) recorded on HDD 530 of personal computer 50 are specified. Therefore, it is premised that a transaction ID used as a checkout transaction ID during checkout is acquired in advance from license administration file 162i in memory card 110 corresponding to the contents data.

In the following description, the transaction ID used as the checkout transaction ID during checkout will be referred to as "checkout timing transaction ID".

Referring to Fig. 20, when a checkin request is input from keyboard 560 of personal computer 50 (step S500), processing for determining whether a checked-out license is recorded on a checkout destination memory card starts first.

License administration module 511 acquires an encryption level 1 license from license administration file 152j recorded on HDD 530, decrypts the encryption level 1 license, and acquires a transaction ID, a content ID, license key Kc, access control information ACm, reproduction control information ACp and checkout information (checkout timing transaction ID used at the time of checkout, checkout destination individual public encryption key KPmcx and the number of possible checkouts) (step S502). If there are plural checked-out licenses, as many checkout timing transaction ID's as the checked-out licenses and one checkout destination individual public encryption key KPmcx per checkout transaction ID are recorded. Since the checkout timing transaction ID's are specified from license administration file 162j of memory card 110 in advance, it is possible to specify and fetch the checkout target checkout destination individual public encryption keys.

Further, license administration module 511 transmits an authentication data transmission request to portable reproduction terminal 100 through USB interface 550, terminal 580 and USB cable 70 (step S504). Then, controller 1106 of portable reproduction terminal 100 receives the authentication data transmission request through terminal 1114, USB interface 1112 and bus BS3, and transmits the authentication data transmission request to memory card 110 through bus BS3 and memory card interface 1200. Controller 1420 of memory card 110 receives the authentication data transmission request through terminal 1426, interface 1424 and bus BS4 (step S506).

When receiving the authentication data transmission request, controller 1420 reads authentication data {KPm3//Cm3}KPa from authentication data holding unit 1400 through bus BS4, and outputs authentication data {KPm3//Cm3}KPa thus read to portable reproduction terminal 100 through bus BS4, interface 1424 and terminal 1426. Controller 1106 of portable reproduction terminal 100 receives authentication data {KPm3//Cm3}KPa through memory card interface 1200 and bus BS3, and transmits authentication data {KPm3//Cm3}KPa to - personal computer 50 through bus BS3, USB interface 1112, terminal 1114 and USB cable 70 (step S508).

License administration module 511 of personal computer 50 receives authentication data {KPm3//Cm3}KPa through terminal 580 and USB interface 550 (step S510), and decrypts received authentication data {KPm3//Cm3}KPa with authentication key KPa (step S512). License administration module 511 performs authentication processing for determining whether or not the processing has been performed normally, i.e., the authentication data encrypted by a valid institution to demonstrate the validity of data has been received, based on the decryption processing result in order to authenticate that memory card 110 holds class public encryption key KPm3 and class certificate Cm3 from the valid memory card (step S514). When it is determined that the authentication data is valid, license administration module 511 approves and accepts class public encryption key KPm3 and class certificate Cm3. The operation moves to the next processing (step S516). When the authentication data is invalid, license administration module 511 does not approve and accept class public encryption key KPm3 and class certificate Cm3 (step S664).

When it is recognized as a result of authentication that the memory card is valid, license administration module 511 generates session key Ks22 (step S516), encrypts generated session key Ks22 with accepted class public encryption key KPm3, and generates encrypted data {Ks22}Km3 (step S518). License administration module 511 then transmits checkout transaction ID//{Ks22}Km3 obtained by adding the checkout timing transaction ID to encrypted data {Ks22}Km3 to portable reproduction terminal 100 through USB interface 550, terminal 580 and USB cable 70 (step S520).

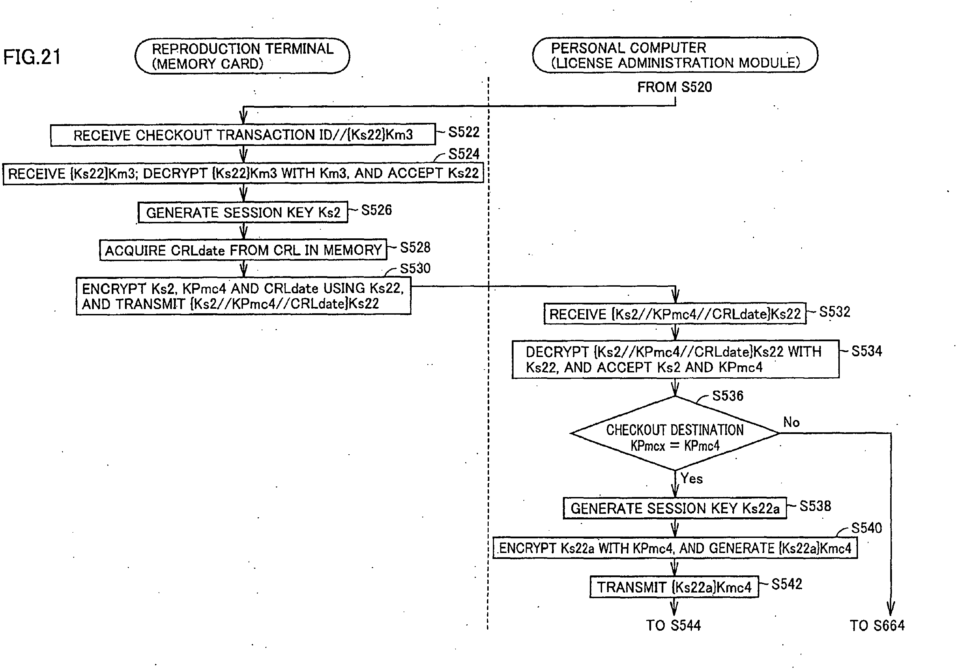

Referring to Fig. 21, controller 1106 of portable reproduction terminal 100 receives checkout timing transaction ID//{Ks22}Km3 through terminal 1114, USB interface 1112 and bus BS3, and outputs checkout timing transaction ID//{Ks22}Km3 to memory card 110 through bus BS3 and memory card interface 1200. Controller 1420 of memory card 110 receives checkout timing transaction ID//{Ks22}Km3 through terminal 1426, interface 1424 and bus BS4 (step S522).

Decryption processing unit 1422 of memory card 110 decrypts checkout timing transaction ID//{Ks22}Km3 with class private decryption key Km3 from Km holding unit 1421, and accepts session key Ks22 (step S524). In accordance with the acceptance of session key Ks22, controller 1420 controls session key generation unit 1418 to generate session key Ks2. Session key generation unit 1418 generates session key Ks2 (step S526). Controller 1420 acquires update date data CRLdate from certificate revocation list CRL of CRL region 1415A of memory 1415 through bus BS4 (step S528), and outputs acquired update date data CRLdate to changeover switch 1446. Encryption processing unit 1406 encrypts session key Ks2, individual public encryption key KPmc4 and update date data CRLdate acquired by sequentially switching the terminal of changeover switch 1446 with session key Ks22 decrypted by decryption processing unit 1422 and acquired through changeover switch 1442, and controller 1420 outputs encrypted data {Ks2//KPmc4//CRLdate}Ks22 to portable reproduction terminal 100 through bus BS4, interface 1424 and terminal 1426. Controller 1106 of portable reproduction terminal 100 acquires encrypted data {Ks2//KPmc4//CRLdate}Ks22 through memory card interface 1200 and bus BS3, and transmits encrypted data {Ks2//KPmc4//CRLdate}Ks22 to personal computer 50 through USB interface 1112, terminal 1114 and USB cable 70 (step S530).

License administration module 511 receives encrypted data {Ks2//KPmc4//CRLdate}Ks22 through terminal 580 and USB interface 550 (step S532), decrypts encrypted data {Ks2//KPmc4//CRLdate}Ks22 thus received with session key Ks22, and accepts session key Ks2 and individual public encryption key KPmc4 (step S534). License administration module 511 checks whether or not accepted individual public encryption key KPmc4 is individual public encryption key KPmcx of the checkout destination acquired from license administration file 152j in step S502 (step S536). When accepted individual public encryption key KPmc4 is not individual public encryption key KPmcx of the checkout destination, accepted individual public encryption key KPmc4 is not the individual public encryption key transmitted from the memory card which checked out the encrypted contents data and the license. Therefore, the operation moves to step S664, finishing the checkin operation. When accepted individual public. encryption key KPmc4 is the individual public encryption key of the checkout destination, memory card 110 means the memory card which checked out the license. In other words, it is thereby confirmed that memory card 110 which transmitted individual public encryption key KPmc4 is the destination which checked out the license.

If so, license administration module 511 generates a session key Ks22a (step S538), encrypts generated session key Ks22a with public encryption key KPmc4, and generates encrypted data {Ks22a}Kmc4 (step 540). License administration module 511 transmits encrypted data {Ks22a}Kmc4 to portable reproduction terminal 100 through USB interface 550, terminal 580 and USB cable 70 (step S542).

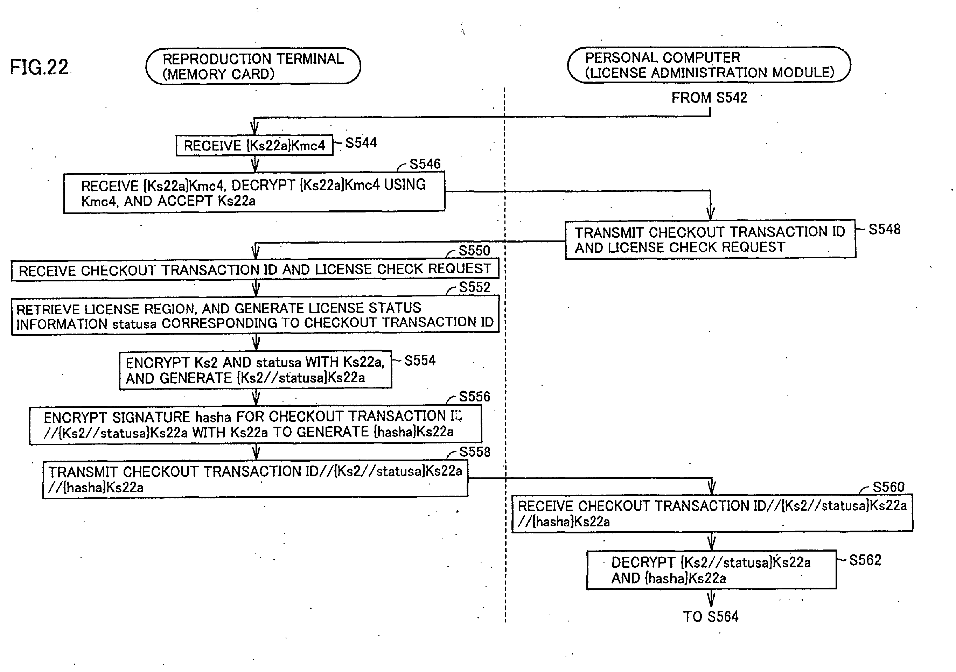

Referring to Fig. 22, controller 1106 of portable reproduction terminal 100 receives encrypted data {Ks22a}Kmc4 through terminal 1114, USB interface 1112 and bus BS3, and outputs encrypted data {Ks22a}Kmc4 to memory card 110 through bus BS3 and memory card interface 1200. Then, controller 1420 of memory card 110 receives encrypted data {Ks22a}Kmc4 through terminal 1426, interface 1424 and bus BS4 (step S544).

Decryption processing unit 1404 decrypts encrypted data {Ks22a}Kmc4 with individual private decryption key Kmc4 from Kmc holding unit 1402, and accepts session key Ks22a (step S546). On the other hand, license administration module 511 transmits the checkout timing transaction ID and a license check request to memory card 110 (step S548). Controller 1420 of memory card 110 receives the checkout timing transaction ID and the license check request through portable reproduction terminal 100 (step S550), retrieves license region 1415C of memory 1415, and generates license status information statusa corresponding to the checkout timing transaction ID (step S552). Controller 1420 outputs session key Ks22a decrypted by decryption processing unit 1404 and status information statusa to changeover switch 1446, and encryption processing unit 1406 encrypts acquired session key Ks2 generated in step S526 and status information statusa by sequentially switching the terminal of changeover switch 1446 with session key Ks22a to thereby generate encrypted data {Ks2//statusa}Ks22a (step S554). Further, controller 1420 generates checkout timing transaction ID//{Ks2//statusa}Ks22a obtained by adding the checkout transaction ID to encrypted data {Ks2//statusa}Ks22a, calculates a hash value for checkout timing transaction ID//{Ks2//statusa}Ks22a based on a hash function, and provides the hash value as an operation result to changeover switch 1446 as a signature hasha. Encryption processing unit 1406 encrypts signature hasha acquired through changeover switch 1446 with session key Ks22a to thereby generate encrypted data {hasha}Ks22a (step S556).

If so, controller 1420 outputs checkout timing transaction ID//{Ks2//statusa}Ks22a//{hasha}Ks22a to portable reproduction terminal 100 through bus BS4, interface 1424 and terminal 1426. Controller 1106 of portable reproduction terminal 100 acquires checkout timing transaction ID//{Ks2//statusa}Ks22a//{hasha}Ks22a through memory card interface 1200 and bus BS3, and transmits checkout timing transaction ID//{Ks2//statusa}Ks22a//{hasha}Ks22a to personal computer 50 through USB interface 1112, terminal 1114 and USB cable 70 (step S558).

License administration module 511 receives checkout timing transaction ID//{Ks2//statusa}Ks22a//{hasha}Ks22a through terminal 580 and USB interface 550, and accepts the checkout transaction ID, {Ks2//statusa}Ks22a and {hasha}Ks22a (step S560). Accepted checkout transaction ID, {Ks2//statusa}Ks22a and {hasha}Ks22a are decrypted with session key Ks22a, and status information statusa and signature hasha are accepted (step S562).

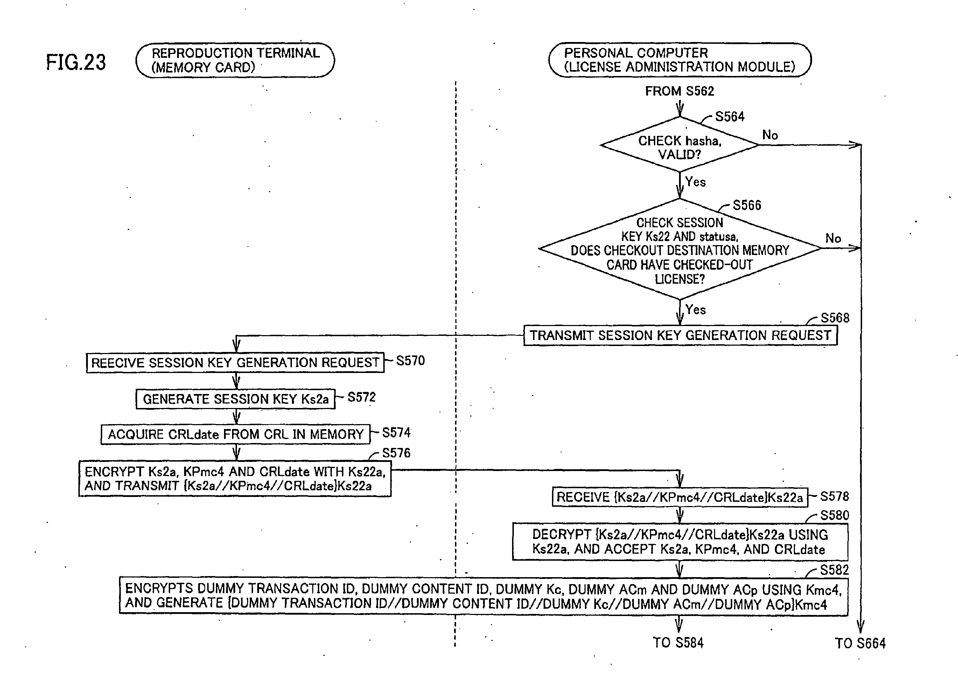

Referring to Fig. 23, license administration module 511 operates a hash value for received checkout timing transaction ID//{Ks2//statusa}Ks22a based on a hash function, and individually generates a signature. License administration module 511 then compares the individually generated signature with accepted signature hasha (step S564). When the individually generated signature does not coincide with accepted signature hasha, it is determined that received checkout timing transaction ID//{Ks2//statusa}Ks22a is tampered data, and the operation moves to step S664, finishing the checkin operation. When the individually generated signature coincides with accepted signature hasha in step S564, license administration module 511 checks session key Ks2 and status information statusa accepted in step S562. Namely, license administration module 511 determines whether or not two session keys Ks2's obtained in steps S534 and S562 coincide with each other and whether or not the license for the checkout transaction ID is effective. In other words, the coincidence of two session keys Ks2's means that the memory card is not changed after step S532. In addition, since session key Ks2 is the value accepted simultaneously with individual public encryption key KPmcx in step S532, the coincidence of two session keys Ks2's means that status information statusa obtained in step S562 is output from checkout target memory card 110 as checkout target. Conversely, when two session keys Ks2's do not coincide each other, this means that the memory card is exchanged to another memory card. Status information statusa indicates a license status for the transaction ID at the time of checkout and indicates whether the transaction ID is recorded on memory card 110. Therefore, if it is checked that two session keys Ks2's do not coincide or that there exists no license from status information statusa, the operation moves to step S664, thus ending the checkin operation. If it is checked that two session keys Ks2's coincide and that there exists license from status information status, the operation moves to step S568, thus continuing the checkin operation (step 566). In steps S550 to S566, it is confirmed that there exists a checked-out license in the license region in the checkout destination memory card.

If it is checked that memory card 110 is a memory card which the license is checked out from personal computer 50 and that there exists a to-be-checked out license in memory card 110, the operation moves to processing for deleting the checkin license recorded on memory card 110.

License administration module 511 generates a session key generation request, and transmits the generated session key generation request to portable reproduction terminal 100 through USB interface 550, terminal 580 and USB cable 70 (step S568). If so, controller 1106 of portable reproduction terminal 100 receives the generated session key generation request through terminal 1114, USB interface 1112 and bus BS3, and transmits the session key generation request to memory card 110 through bus BS3 and memory card interface 1200. Controller 1420 of memory card 110 receives the session key generation request through terminal 1426, interface 1424 and bus BS4 (step S570).

Controller 1420 controls session key generation unit 1418 to generate a session key Ks2a (step S572). On the other hand, controller 1420 acquires update date data CRLdate from certificate revocation list CRL in CRL region 1415A of memory 1415 through bus BS4 (step S574), and outputs acquired update date data CRLdate to changeover switch 1446. Encryption processing unit 1406 encrypts session key Ks2a, individual public encryption key KPmc4 and update date data CRLdate obtained by sequentially switching the terminal of changeover switch 1446 with session key Ks22a decrypted by decryption processing unit 1422 and acquired through changeover switch 1442, and controller 1420 outputs encrypted data {Ks2a//KPmc4//CRLdate}Ks22a to portable reproduction terminal 100 through bus BS4, interface 1424 and terminal 1426. Controller 1106 of portable reproduction terminal 100 acquires encrypted data {Ks2a//KPmc4//CRLdate}Ks22a through memory card interface 1200 and bus BS3, and transmits encrypted data {Ks2a//KPmc4//CRLdate}Ks22a to personal computer 50 through USB interface 1112, terminal 1114 and USB cable 70 (step S576).

License administration module 511 receives encrypted data {Ks2a//KPmc4//CRLdate}Ks22a through terminal 580 and USB interface 550 (step S578), decrypts encrypted data {Ks2a//KPmc4//CRLdate}Ks22a thus received with session key Ks22a, and accepts session key Ks2a, individual public encryption key KPmc4 and update date data CRLdate (step S580). It is assumed herein as follows. Since the update date of certificate revocation list CRL administrated by license administration module 511 is the same as that of certificate revocation list CRL recorded on CRL region 1415A of memory card 110 and a new license is not added, the output of update date data CRLdate of certificate revocation list CRL recorded on license region 1415C of memory card 110 is received but update processing is not performed. However, the certificate revocation list update processing may be performed through the same procedures as those for the checkout operation. If so, license administration module 511 generates a dummy license which is an invalid license (a dummy transaction ID, a dummy content ID, dummy license key Kc, dummy access control information ACm and dummy reproduction restriction information ACp) in order to overwrite the dummy license on the checked-in license in memory card 110 and to delete the latter license, encrypts the dummy transaction ID, the dummy content ID, dummy license key Kc, dummy access control information ACm and dummy reproduction restriction information ACp with accepted public encryption key KPmc4, and generates encrypted data {dummy transaction ID//dummy content ID//dummy license key Kc//dummy access control information ACm//dummy reproduction restriction information ACp}Kmc4 (step S582).

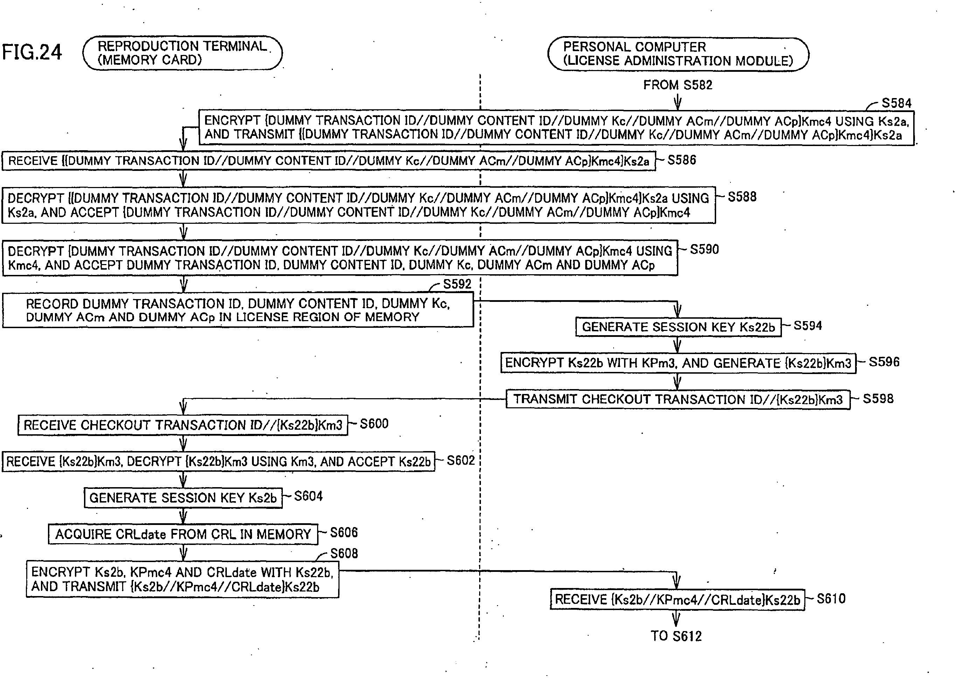

Referring to Fig. 24, license administration module 511 further encrypts encrypted data {dummy transaction ID//dummy content ID//dummy license key Kc//dummy access control information ACm//dummy reproduction restriction information ACp}Kmc4 with accepted session key Ks2a, and transmits encrypted data {{dummy transaction ID//dummy content ID//dummy license key Kc//dummy access control information ACm//dummy reproduction restriction information ACp}Kmc4}Ks2a to portable reproduction terminal 100 through USB interface 550, terminal 580 and USB cable 70 (step S584).

Controller 1106 of portable reproduction terminal 100 receives encrypted data {{dummy transaction ID//dummy content ID//dummy license key Kc//dummy access control information ACm//dummy reproduction restriction information ACp}Kmc4}Ks2a through terminal 1114, USB interface 1112 and bus BS3, and outputs encrypted data {{dummy transaction ID//dummy content ID//dummy license key Kc//dummy access control information ACm//dummy reproduction restriction information ACp}Kmc4}Ks2a to memory card 110 through bus BS3 and memory card interface 1200. If so, controller 1420 of memory card 110 receives encrypted data {{dummy transaction ID//dummy content ID//dummy license key Kc//dummy access control information ACm//dummy reproduction restriction information ACp}Kmc4}Ks2a through terminal 1426, interface 1424 and bus BS4 (step S586).

Decryption processing unit 1412 decrypts encrypted data {{dummy transaction ID//dummy content ID//dummy license key Kc//dummy access control information ACm//dummy reproduction restriction information ACp}Kmc4}Ks2a with session key Ks2a, and accepts encrypted data {dummy transaction ID//dummy content ID//dummy license key Kc//dummy access control information ACm//dummy reproduction restriction information ACp}Kmc4 (step S588). The decrypted data is input into decryption processing unit 1404, decryption processing unit 1404 decrypts the input data using individual private decryption key Kmc4 from Kmc holding unit 1402, and accepts the dummy transaction ID, the dummy content ID, dummy license key Kc, dummy access control information ACm and dummy reproduction restriction information ACp (step S590).

Then, controller 1420 records the dummy transaction ID, the dummy content ID, dummy license key Kc, dummy access control information ACm and dummy reproduction restriction information ACp on license region 1415C of memory 1415 through bus BS4 (step S592). As can be seen, by recording the dummy transaction ID, the dummy content ID, dummy license key Kc, dummy access control information ACm and dummy reproduction restriction information ACp on license region 1415C of memory 1415, the license transmitted to memory card 110 at the time of checkout is deleted. According to the present invention, therefore, the license checked out to memory card 110 is deleted by overwriting the dummy license on the checked-out license.

When the deletion of the license in memory card 110 is completed, the operation moves to processing for determining whether the license which is checked in is deleted in checkout destination memory card 110.

License administration module 511 generates a session key Ks22b (step S594), encrypts generated session key Ks22b with public encryption key KPm3, and generates encrypted data {Ks22b}Km3 (step S594). License administration module 511 then transmits checkout timing transaction ID//{Ks22b}Km3 obtained by adding the checkout timing transaction ID to encrypted data {Ks22b}Km3 to portable reproduction terminal 100 through USB interface 550, terminal 580 and USB cable 70 (step S598). Controller 1106 of portable reproduction terminal 100 receives checkout timing transaction ID//{Ks22b}Km3 through terminal 1114, USB interface 1112 and bus BS3, and transmits checkout timing transaction ID//{Ks22b}Km3 to memory card 110 through bus BS3 and memory card interface 1200. Controller 1420 of memory card 110 receives checkout timing transaction ID//{Ks22b}Km3 through terminal 1426, interface 1424 and bus BS4 (step S600).

Decryption processing unit 1422 decrypts encrypted data {Ks22b}Km3 with private decryption key Km3 from Km holding unit 1421, and accepts session key Ks22b (step S602). In response to the acceptance of session key Ks22b, controller 1420 controls session key generation unit 1418 and session key generation unit 1418 generates session key Ks2b (step S604). On the other hand, controller 1420 acquires update date data date from certificate revocation list CRL of CRL region 1415A of memory 1415 through bus BS4 (step S606), and outputs acquired update date data CRLdate to changeover switch 1446. Encryption processing unit 1406 encrypts session key Ks2b, public encryption key KPmc4 and update date data CRLdate by sequentially switching the terminal of changeover switch 1446 with session key Ks22b decrypted by decryption processing unit 1422 and acquired through changeover switch 1442, and controller 1420 outputs encrypted data {Ks2b//KPmc4//CRLdate}Ks22b to portable reproduction terminal 100 through bus BS4, interface 1424 and terminal 1426. Controller 1106 of portable reproduction terminal 100 acquires encrypted data {Ks2b//KPmc4//CRLdate}Ks22b through memory card interface 1200 and bus BS3, and transmits encrypted data {Ks2b//KPmc4//CRLdate}Ks22b to personal computer 50 through USB interface 1112, terminal 1114 and USB cable 70 (step S608).

License administration module 511 receives encrypted data {Ks2b//KPmc4//CRLdate}Ks22b through terminal 580 and USB interface 550 (step S610).

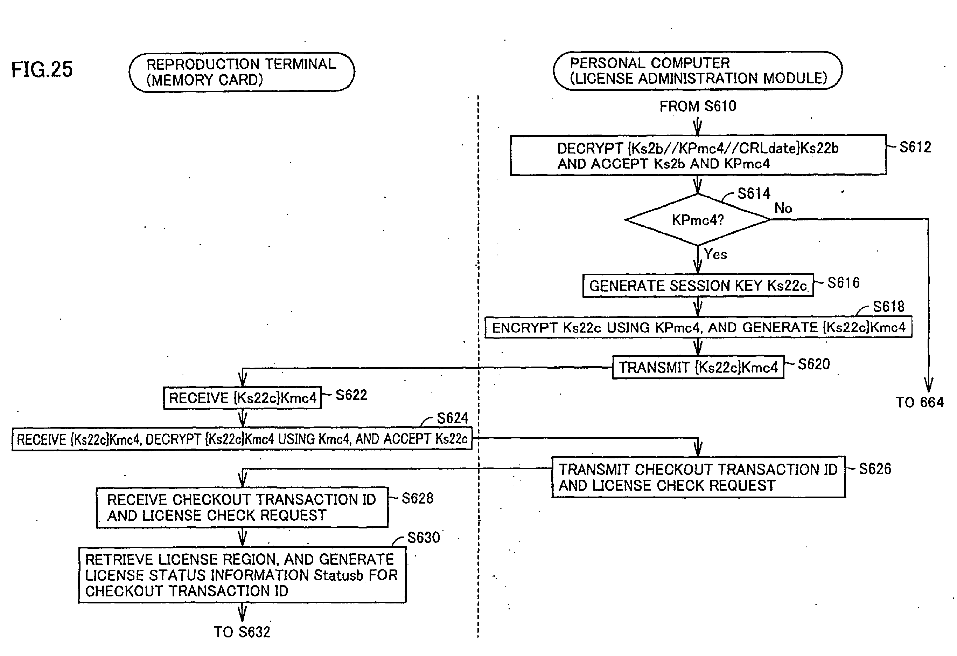

Referring to Fig. 25, license administration module 511 decrypts encrypted data {Ks2b//KPmc4//CRLdate}Ks22b thus received with session key Ks22b, and accepts individual public encryption key KPmc4 (step S612). In this step, similarly to step S534, update date data CRLdate is not accepted. License administration module 511 then determines whether or not accepted individual public encryption key KPmc4 is already received individual public encryption key KPmc4 (step S614). At this time, when a memory card different from memory card 110 which checked out the encrypted contents data and the license is attached to portable reproduction terminal 100, received individual public encryption key KPmc4 does not coincide with the public encryption key of the checkout destination. Therefore, the operation moves to step S664, finishing the checkin operation. When the received individual public encryption key coincides with the already received individual public encryption key, the operation moves to the next step S616. In steps S608 to S616, on condition that individual public encryption key KPmc4 of memory card 110 is received and that received individual public encryption key KPmc4 coincides with the public encryption key of the checkout destination, the operation moves to the next step S616. Therefore, it is reconfirmed that the memory card intending to checkin the encrypted contents data and the license is the memory card which checked out the encrypted contents data and the license. By thus reconfirming the checkin destination of the encrypted contents data and the license, it is possible to accurately checkin the license.

When the accepted individual public encryption key coincides with individual public encryption key in checkout destination; license administration module 511 generates a session key Ks22c (step S616), encrypts session key Ks22c thus generated with individual public encryption key KPmc4, and generates encrypted data {Ks22c}Kmc4 (step S618). License administration module 511 transmits encrypted data {Ks22c}Kmc4 to portable reproduction terminal 100 through USB interface 550, terminal 580 and USB cable 70 (step S620). If so, controller 1106 of portable reproduction terminal 100 receives encrypted data {Ks22c}Kmc4 through terminal 1114, USB interface 1112 and bus BS3, and transmits encrypted data {Ks22c}Kmc4 to memory card 110 through bus BS3 and memory card interface 1200. Controller 1420 of memory card 110 receives encrypted data {Ks22c}Kmc4 through terminal 1426, interface 1424 and bus BS4 (step S622).

Decryption processing unit 1404 decrypts encrypted data {Ks22c}Kmc4 with individual private decryption key Kmc4 from Kmc holding unit 1402, and accepts session key Ks22c (step S624). On the other hand, license administration module 511 transmits the checkout timing transaction ID and the license confirmation request to memory card 110 (step S626). Controller 1420 of memory card 110 receives the checkout timing transaction ID and the license check request through portable reproduction terminal 100 (step S628), retrieves license region 1415C of memory 1415, and generates status information statusa on a license corresponding to the checkout timing transaction ID (step S630).

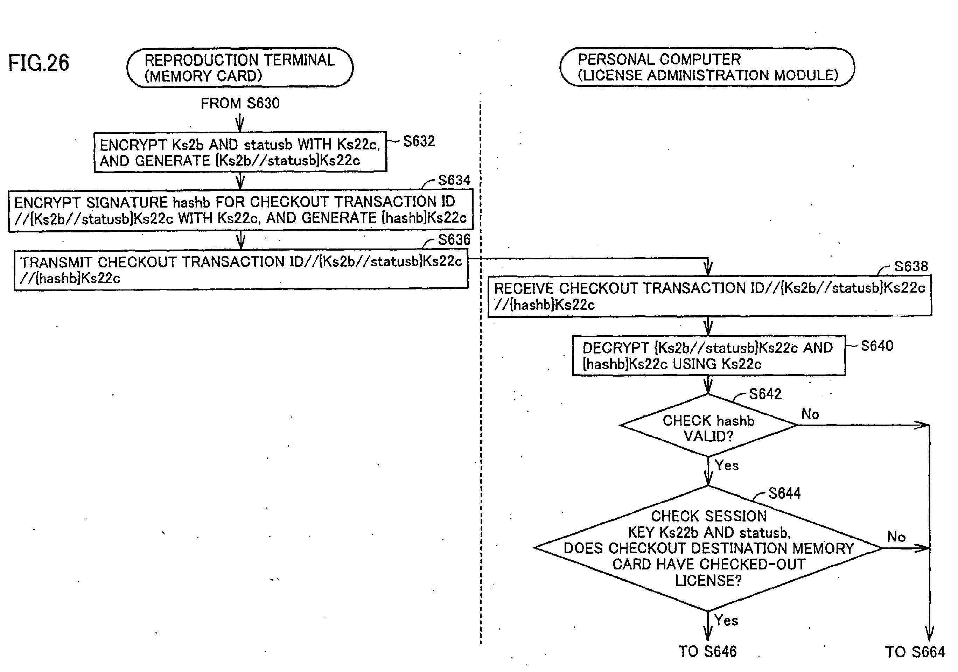

Referring to Fig. 26, controller 1420 outputs session key Ks22c decrypted by decryption processing unit 1404 and status information statusa to changeover switch 1446, and encryption processing unit 1406 encrypts acquired session key Ks2b and status information statusa by sequentially switching the terminal of changeover switch 1446 with session key Ks22c to thereby generate encrypted data {Ks2b//statusa}Ks22c (step S632). Further, controller 1420 generates a signature hashb for checkout timing transaction ID//{Ks2b//statusa}Ks22c obtained by adding the checkout timing transaction ID to encrypted data {Ks2b//statusa}Ks22c, and provides generated signature hashb to changeover switch 1446. Encryption processing unit 1406 encrypts signature hashb acquired through changeover switch 1446 with session key Ks22c, and generates encrypted data {hashb}Ks22c (step S634).

Controller 1420 outputs checkout transaction ID//{Ks2b//statusa}Ks22c//{hashb}Ks22c to portable reproduction terminal 100 through bus BS4, interface 1424 and terminal 1426. Controller 1106 of portable reproduction terminal 100 acquires checkout timing transaction ID//{Ks2b//statusa}Ks22c//{hashb}Ks22c through memory card interface 1200 and bus BS3, and transmits checkout timing transaction ID//{Ks2b//statusa}Ks22c//{hashb}Ks22c to personal computer 50 through USB interface 1112, terminal 1114 and USB cable 70 (step S636).

License administration module 511 receive checkout timing transaction ID//{Ks2b//statusa}Ks22c//{hashb}Ks22c through terminal 580 and USB interface 550, and accepts the checkout timing transaction ID, {Ks2b//statusa}Ks22c and {hashb}Ks22c (step S638). If so, license administration module 511 decrypts received {Ks2b//statusb}Ks22c and {hashb}Ks22c with session key Ks22c, and accepts status information statusb and signature hashb (step S640).

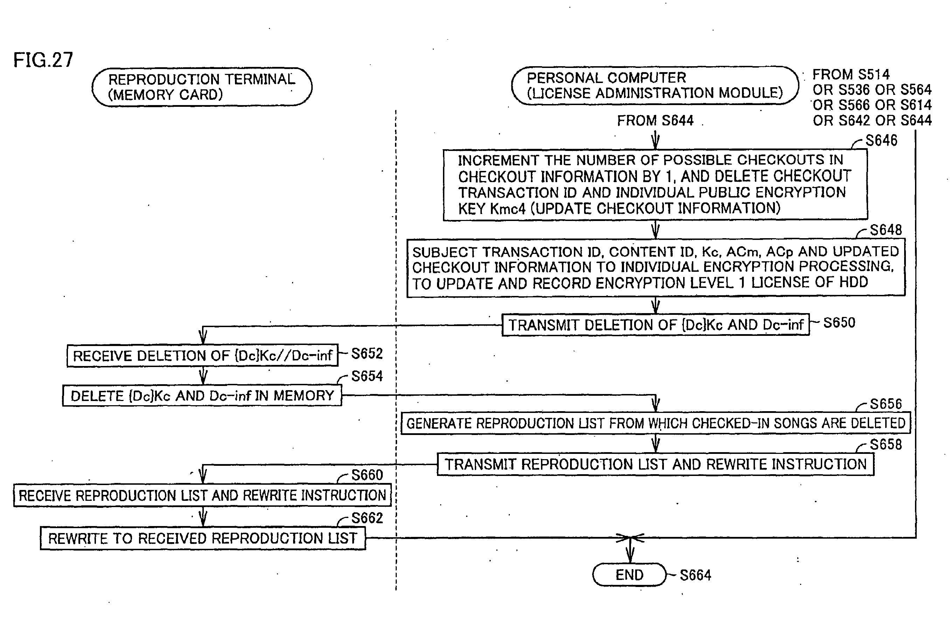

License administration module 511 determines whether or not checkout timing transaction ID//{Ks2b//statusb}Ks22c is valid based on accepted signature hashb (step S642). That is, license administration module 511 individually generates a signature based on the hash function of checkout timing transaction ID//{Ks2b//statusb}Ks22c, determines whether or not signature hashb is valid by whether the individually generated signature coincides with received signature hashb. If signature hashb is not valid, the operation moves to step S664, finishing the checkin operation. If signature hashb is determined to be valid in step S642, license administration module 511 checks two session keys Ks2b's and status information statusb accepted in steps S612 and S640, respectively. Namely, it is checked based on the coincidence of two session keys Ks2b's that no memory card is exchanged during steps S612 to S640, i.e., the status information statusb is from the memory card having individual public encryption key KPmc4 and checked based on status information statusb that a license for the checkout timing transaction ID is not recorded. Further, when the license for the checkout transaction ID does not exist, the operation moves to step S646 of Fig. 27. In steps S628 to S646, it is confirmed that the license checked out into the checkout destination memory card is deleted and does not exist.

If it is determined that the license checked out into the checkout destination memory card is deleted and does not exist, update processing for license administration file 152j is performed.

Referring to Fig. 27, license administration module 511 of personal computer 50 increments the number of possible checkouts in checkout information by one, the checkout transaction ID for the checked-out license and individual public encryption key KPmc4 of the checkout destination memory card is deleted to thereby update checkout information (step S646). License administration module 511 subjects again individual encryption to the transaction ID, the content ID, license key Kc, access control information ACm, reproduction restriction information ACp and updated checkout information to generate an encryption level 1 license, and the level 1 license of license administration file 152j recorded on HDD 530 is updated (step S648).

The update processing for license administration file 152j is completed, license administration module 511 performs update processing for data region 1415D in memory card 110.

License administration module 511 transmits a deletion instruction to delete content file 161i storing encrypted contents data {Dc}Kc and additional information Dc-inf reproduced by the checked-out license and corresponding license administration file 162i, to portable reproduction terminal 100 through USB interface 550, terminal 580 and USB cable 70 (step S650). Controller 1106 of portable reproduction terminal 100 receives the deletion instruction to delete content file 161i storing encrypted contents data {Dc}Kc and additional information Dc-inf and corresponding license administration file 162i through terminal 1114, USB interface 1112 and bus BS3, and outputs the deletion instruction to delete content file 161i storing encrypted contents data {Dc}Kc and additional information Dc-inf and corresponding license administration file 162i to memory card 110 through bus BS3 and memory card interface 1200. If so, controller 1420 of memory card 110 receives the deletion instruction to delete content file 161i storing encrypted contents data {Dc}Kc and additional information Dc-inf and corresponding license administration file 162i through terminal 1426, interface 1424 and bus BS4 (step S652). Controller 1420 deletes content file 161i storing encrypted contents data {Dc}Kc and additional information Dc-inf and corresponding license administration file 162i recorded on data region 1415 of memory 1415 through bus BS4 (step S654).

License administration module 511 of personal computer 50 deletes the checked-in song from the reproduction list of memory card 110 acquired in advance to generate a new reproduction list (step S656), and transmits the generated reproduction list and a reproduction list rewrite instruction to memory card 110 (step S658). Controller 1420 of memory card 110 receives the reproduction list and the rewrite instruction through portable reproduction terminal 100 (step S660), and rewrites the content of reproduction list file 160 recorded on data region 1415D of memory 1415 through bus BS4 (step S662), finishing the checkin operation (step S664).

As can be seen, the encrypted contents data and the license are returned from the destination which checked out the encrypted contents data and the license, whereby it is possible to lend the encrypted contents data and the license acquired by personal computer 50 to memory card 110 attached to portable reproduction terminal 100 and to return the encrypted contents data and the license from memory card 110.

### [Reproduction]

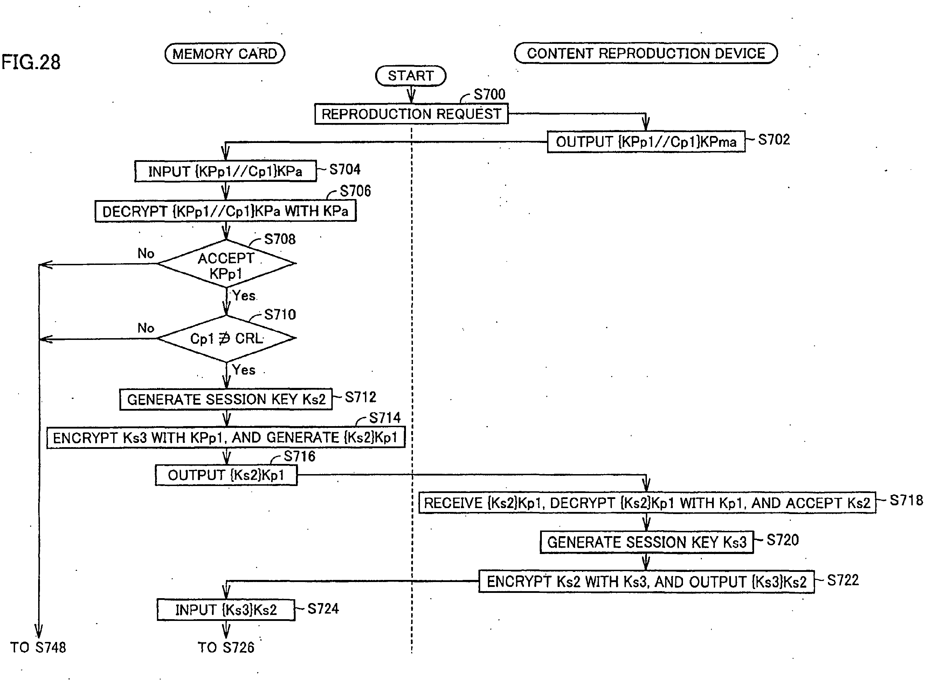

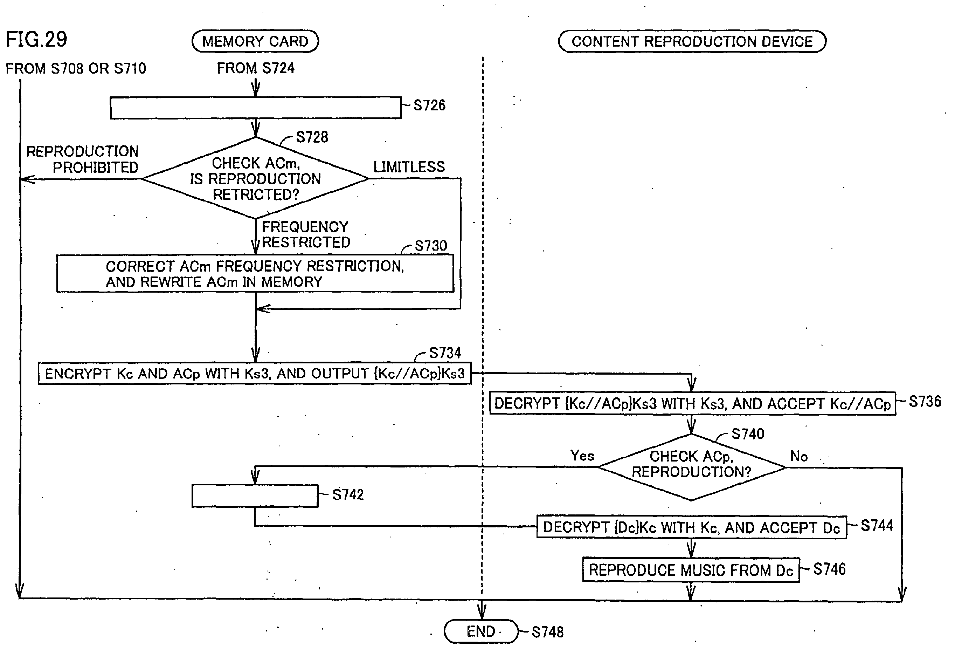

Referring to Figs. 28 and 29, the reproduction operation of portable reproduction terminal 100 (to be also referred to as "reproduction device", which applies hereafter) for reproducing the contents data checked out to memory card 110 will be described.

It is premised that before the processing of Fig. 28, controller 1106 of portable reproduction terminal 100 specifies a content file 161k (1 ≤ k ≤ n) and a license administration file 162k to be reproduced by reproduction list file 160 recorded on data region 1415D of memory card 110.

Referring to Fig. 28, when a reproduction operation starts, a reproduction instruction is input from the user of portable reproduction terminal 100 into portable reproduction terminal 100 (step S700). Controller 1106 then reads authentication data {KPp1//Cm1}KPa from authentication data holding unit 1500 through bus BS3, and outputs authentication data {KPp1//Cm1}KPa to memory card 110 through memory card interface 1200 (step S702).

Memory card 110 accepts authentication data {KPp1//Cm1}KPa (step S704). Decryption processing unit 1408 of memory card 110 decrypts authentication data {KPp1//Cm1}KPa with public authentication key KPa held in KPa holding unit 1414 (step S706), and controller 1420 conducts authentication processing based on the decryption processing result of decryption processing unit 1408. Namely, controller 1420 conducts authentication processing for determining whether or not authentication data {KPp1//Cm1}KPa is valid authentication data (step S708). When the authentication data is invalid, the operation moves to step S748, finishing the reproduction operation. When the authentication data is valid, controller 1420 determines whether or not the identification code of acquired class certificate Cp 1 is listed in the certificate revocation list read from CRL region 1415A of memory 1415 (step S710). When it is determined that class certificate Cp 1 is included in the certificate revocation list data, the operation moves to step S748, finishing the reproduction operation.

When it is determined in step S710 that the identification code of class certificate Cp1 is listed in certificate revocation list CRL, session key generation unit 1418 of memory card 110 generates session key Ks2 for a reproduction session (step S712). Encryption processing unit 1410 outputs encrypted data {Ks2}Kp 1 encrypting session key Ks2 from session key generation unit 1418 with class public encryption key KPp1 decrypted by decryption processing unit 1408 to bus BS3 (step S714). If so, controller 1420 outputs encrypted data {Ks2}Kp1 to memory card interface 1200 through interface 1424 and terminal 1426 (step S716). Controller 1106 of portable reproduction terminal 100 acquires encrypted data {Ks2}Kp1 through memory card interface 1200. Kp1 holding unit 1502 outputs private decryption key Kp1 to decryption processing unit 1504.

Decryption processing unit 1504 decrypts encrypted data {Ks2}Kp1 with class private decryption key Kp 1 output from Kp 1 holding unit 1502 and paired with class public encryption key KPp1, and outputs session key Ks2 to encryption processing unit 1506 (step S718). Session key generation unit 1508 generates session key Ks3 for the reproduction session, and outputs session key Ks3 to encryption processing unit 1506 (step S720). Encryption processing unit 1506 encrypts session key Ks3 from session key generation unit 1508 with session key Ks2 from decryption processing unit 1504 to output encrypted data {Ks3}Ks2, and controller 1106 outputs encrypted data {Ks3}Ks2 to memory card 110 through bus BS3 and memory card interface 1200 (step S722).

If so, decryption processing unit 1412 of memory card 110 receives encrypted data {Ks3}Ks2 through terminal 1426, interface 1424 and bus BS4 (step S724).

Referring to Fig. 29, decryption processing unit 1412 decrypts encrypted data {Ks3}Ks2 with session key Ks2 generated by session key generation unit 1418, and accepts session key Ks3 generated by portable reproduction terminal 100 (step S726).

In response to the acceptance of session key Ks3, controller 1420 checks access control information ACm (step S728).

In step S728, access control information ACm which is information on the restriction to memory access is checked. If access control information ACm indicates that reproduction is already prohibited, the reproduction operation is finished. If access control information indicates restriction, data of access control information ACm is updated to update a reproducible frequency and the operation moves to the next step (step S730). On the other hand, if the reproduction frequency is not restricted by access control information ACm, the operation skips step S730 and moves to the next step (step S732) without updating access control information ACm.

In step S728, if it is determined that reproduction is possible by the reproduction operation, license key Kc and reproduction restriction information ACp on the reproduction requested song recorded on license region 1415C of memory 1415 are output onto bus BS4 (step S732).

Obtained license key Kc and reproduction restriction information ACp are transmitted to encryption processing unit 1406 through a contact Pf of changeover switch 1446. Encryption processing unit 1406 encrypts license key Kc and reproduction restriction information ACp received through changeover switch 1446 with session key Ks3 received from decryption processing unit 1412 through contact Pb of changeover switch 1442, and outputs encrypted data {Kc//ACp}Ks3 to bus BS4 (step S734).

Encrypted data {Kc//ACp}Ks3 output to bus BS4 is transmitted to portable reproduction terminal 100 through interface 1424, terminal 1426 and memory card interface 1200.

Decryption processing unit.1510 of portable reproduction terminal 100 decrypts encrypted data {Kc//ACp}Ks3 transmitted to bus BS3 through memory card interface 1200, and portable reproduction terminal 100 accepts license key Kc and reproduction restriction information ACp (step S736). Decryption processing unit 1510 transmits license key Kc to decryption processing unit 1516, and outputs reproduction restriction information ACp to bus BS3.

Controller 1106 accepts reproduction restriction information ACp, and checks whether or not reproduction is possible (step S740).

If it is determined that reproduction is prohibited by reproduction restriction information ACp in step S740, the reproduction operation is finished.

If it is determined that reproduction is possible in step S740, controller 1106 requests encrypted contents data {Dc}Kc to memory card 110 through memory card interface 1200. If so, controller 1420 of memory card 110 acquires encrypted contents data {Dc}Kc from memory 1415, and outputs encrypted contents data {Dc}Kc to memory card interface 1200 through interface 1424 and terminal 1426 (step S742).

Controller 1106 of portable reproduction terminal 100 acquires encrypted contents data {Dc}Kc from content file 161k through memory card interface 1200, and provides encrypted contents data {Dc}Kc to decryption processing unit 1516 through bus BS3.

Decryption processing unit 1516 decrypts encrypted contents data {Dc}Kc with license key Kc output from decryption processing unit 1510 to thereby acquire contents data Dc (step S744).

Decrypted contents data Dc is output to music reproduction unit 1518, music reproduction unit 1518 reproduces the contents data; and DA converter 1519 converts the digital signal into an analog signal and outputs the analog signal to terminal 1530. The music data is output to headphones 130 through the external output device, and reproduced (step S746). Thus, the reproduction operation is finished.

In the description of the respective processings, a method for specifying the license recorded on license region 1415C of memory card 110 has not been described. At the time of checkin and reproduction, entry numbers indicated by entry numbers in license administration files 1621 to 162n recorded on data region 1415D of memory card 110 are input into memory card 110 just before access control information ACm is checked in memory card 110. In addition, at the time of checkout, it is necessary to input unused entry numbers into memory card 110 just before the license is written to license region 1415C.

Further, it has been described that the checkout/checkin processings are conducted to the encrypted contents data and the license. However, as is obvious from the description, it is only the license that is transmitted before being protected using the encryption processing and the encrypted contents data is not transmitted after being encrypted. This is because the encrypted contents data cannot be reproduced without a license and the encrypted contents data itself is of no value. Therefore, only the license is subjected to the checkout/checkin processings whereas the encrypted contents data is copied to the memory card at need, and deleted if it becomes unnecessary. A method for separating the license from the encrypted contents data is not exceptional.

According to the embodiment of the present invention, the encrypted contents data and the license are temporarily transmitted to the memory card by checkout, and the encrypted contents data and the license thus checked out are returned from the memory card by checkin. It is, therefore, possible to shift the encrypted contents data and the license acquired by the personal computer to a device other than the personal computer.

It should be contemplated that the embodiment disclosed herein is for illustrated purposes and not for limiting purposes in all respects. The scope of the present invention is indicated not by the description of the mode for carrying out the invention given above but by claims, and is intended to include all changes within the equivalent meaning and scope of the claims.

### Industrial Applicability

The data terminal device according to the present invention can lend/return the encrypted contents data acquired from the distribution server or the music CD by means of software and the license for recovering the encrypted contents data to and from the other device. Therefore, the data terminal device according to the present invention is applicable to a data terminal device capable of shifting encrypted contents data and a license acquired by software to the other device.

## Claims

1. A data terminal device (50) for lending and returning encrypted contents data obtained by encrypting contents data and a license for decrypting said encrypted contents data to obtain the original contents data or for lending and returning said license, to and from a data recording device (110), the data terminal device (50) comprising:
a storage unit (530) storing said encrypted contents data, said license and lending information which is information for administrating said lending;
a control unit (510, 511); and
an interface (550) controlling data exchange between said data recording device (110) and said control unit (510, 511), wherein
in said lending out,
said control unit (510, 511) receives an inherent ID capable of specifying said data recording device (110) and allocated inherently to. each data recording device (110) from said data recording device (110) through said interface (550), generates a lending ID inherent to each lending and for specifying a lending license for lending said encrypted contents data and said license or for lending said license, generates a lending license including said generated lending ID and for decrypting said encrypted contents data to obtain the original content based on said license stored in said storage unit (530), transmits the generated lending license or said lending license and said encrypted contents data to said data recording device (110) through said interface (550), and adds said received inherent ID and said generated lending ID to said lending information while associating said received inherent ID with said generated lending ID, and
in said return,
when said control unit (510, 511) checks that said inherent ID is received from said data recording device (110) through said interface (550), the received inherent ID coincides with the inherent ID included in said lending information, and that the lending license including said lending ID associated with said inherent ID included in said lending information is recorded in said data recording device (110), said control unit (510, 511) returns said lending license recorded on said data recording device (110) or said lending license and said encrypted contents data decryptable based on said lending license from said data recording device (110), and deletes the lending ID and the inherent ID corresponding to said returned lending license from said lending information.

2. The data terminal device according to claim 1, wherein
said data recording device (110) holds authentication data demonstrating validity of said data recording device (110), and a first public encryption key having an inherent value to each said data recording device (110),
said inherent ID is said first public encryption key,
in said lending out and said returning,
said control unit (510, 511) receives the authentication data from said data recording device (110) through said interface (550), and receives said first public encryption key from said data recording device (110) through said interface (550) when determining that the received authentication data is valid.

3. The data terminal device according to claim 2, wherein
said data recording device (110) holds a first public encryption key having an inherent value to each said data recording device (110), and
in said lending out,
said control unit encrypts said lending license using said received first public encryption key, and transmits the encrypted lending license to said data recording device (110) through said interface (550).

4. The data terminal device according to claim 2, wherein
said authentication data includes a second public encryption key decryptable in said data recording device (110),
the data terminal device further comprises:
a symmetric key generation unit (511) generating a first symmetric key by random numbers;
a first encryption unit (511) encrypting data using said second public encryption key; and
a first decryption unit decrypting the encrypted data which is encrypted using said first symmetric key,
in said lending out and said returning,
said control unit (510, 511) transmits said first symmetric key generated by said symmetric key generation unit (511) and encrypted with said second public encryption key extracted by said authentication processing to said data recording device (110) through said interface (550), and
said control unit receives said first public encryption key, which is encrypted using said first symmetric key in said data recording device (110), through said interface (550), decrypts said received first public encryption key, which is encrypted with said first symmetric key, in said first decryption unit using said first symmetric key, and acquires said first public encryption key.

5. The data terminal device according to claim 4, further comprising:
a second encryption unit (511) encrypting the data using said first public encryption key; and
a third encryption unit (511) encrypting the data using the second symmetric key received from said data recording device (110),
in said lending out and said returning,
said data recording device (110) receives said first public encryption key and said second symmetric key which are encrypted using said first symmetric key from said data recording device (110) through said interface (550), and encrypts said first public encryption key and said second symmetric key encrypted using said received first symmetric key using said first symmetric key in said first decryption unit (511), and acquires said first public encryption key and said second symmetric key, and
in said lending out,
said control unit (510, 511) encrypts said lending license in said second encryption unit (511) using said first public encryption key, further encrypts said lending license encrypted using said first public encryption key in said third encryption unit (511) using said second symmetric key, and transmits an output of said third encryption unit (511) to said data recording device (110) through said interface (550).

6. The data terminal device according to any of claims 1 to 5, wherein
said lending information includes a possible lending frequency with which said encrypted contents data and said license or said license can be lent,
in said lending out,
said control unit (510, 511) further determines whether or not said encrypted contents data and said license or said license can be lent based on said possible lending frequency included in said lending information, and when determining that said encrypted contents data and said license or said license can be lent, said control unit (510, 511) generates said lending license, corrects said possible lending frequency by subtracting 1 from said possible lending frequency, and changes said lending information to add said lending ID and said inherent ID while associating said lending ID and said inherent ID with said possible lending frequency,
in said return,
said control unit (510, 511) changes said lending information so that said lending ID has a value obtained by incrementing said possible lending frequency associated with the lending ID by one.

7. The data terminal device according to any of claims 1 to 5, wherein
in said lending out,
said control unit (510, 511) generates said lending license including prohibition information for prohibiting said lending license from being copied and/or shifted to the other device.

8. The data terminal device according to any of claims 1 to 7, wherein
in said return,
when said lending license or said lending license and the encrypted contents data decryptable based on said lending license are returned, said control unit (510, 511) instantly checks that the license including said lending ID included in said lending information is not recorded on said data recording device (110), and when it cannot be checked that the license is not recorded, said control unit (510, 511) does not change said lending information.

9. The data terminal device according to any of claims 1 to 5, wherein
in said return,
when said lending license or said lending license and the encrypted contents data decryptable based on said lending license are returned, said control unit (510, 511) instantly receives said inherent ID from said data recording device (110) through said interface (550), rechecks that said received inherent ID coincides with the inherent ID included in said lending information, checks that the license including said lending ID associated with said inherent ID included in said lending information is recorded on said data recording device (110), and when recheck is not conducted or when check is conducted, said control unit (510, 511) does not change said lending information.

10. The data terminal device according to any of claims 1 to 5, wherein
in said return,
said control unit (510, 511) transmits said lending ID associated with the inherent ID included in said lending information to said data recording device (110) through said interface, issues a request to transmit status information indicating whether or not the lending license including the transmitted lending ID is recorded on said data recording device (110), to said data recording device (110) through said interface (550), receives said status information transmitted from said data recording device through said interface (550) in response to the request, and checks based on the received status information that the lending license including said lending ID is recorded on said data recording device (110).

11. The data terminal device according to any of claims 1 to 10, wherein
said control unit (510, 511) receives said status information from said data recording device (110), as data with an electronic signature demonstrating validity of said status information, determining whether said status information is valid based on said electronic signature, and checks that the lending license including the lending ID is recorded on said data recording device (110) based on said received status information when determining that said status information is valid.

12. The data terminal device according to any of claims 1 to 5, wherein
in said return,
said control unit (510, 511) deletes said lending license or said lending license and the encrypted contents data decryptable based on said lending license, thereby returning said lending license or said lending license and the encrypted contents data decryptable based on said lending license from said data recording device (110).

13. The data terminal device according to claim 12, wherein
in said return,
said control unit (510, 511) transmits a deletion license with which said encrypted contents data cannot be decrypted, to said data recording device (110) through said interface (550), and overwrites the deletion license on said lending license to thereby delete said lending license from said data recording device (110).

14. A program allowing a computer to execute lending and returning of encrypted contents data obtained by encrypting contents data and a license for decrypting said encrypted contents data and obtaining the original contents data or for lending and returning said license, said computer being allowed to execute:
a first step of receiving an inherent ID allocated inherently to each borrower (110) from said data recording device (110);
a second step, following said first step, of generating a lending ID for specifying a lending license inherent to each lending and lent to said borrower (110) during said lending;
a third step of generating said lending license including said generated lending ID, for decrypting said encrypted contents data and obtaining the original contents data;
a fourth step of transmitting said encrypted contents data and said generated lending license or transmitting said lending license to said borrower (110);
a fifth step of adding said generated lending ID and said received inherent ID to lending information for managing the lending while associating said generated lending ID with said received inherent ID;
a sixth step, following said first step, of checking whether or not said received inherent ID coincides with the inherent ID included in said lending information and thereby checking whether said data recording device (110) is the borrower (110) of said lending license during said returning;
a seventh step of, when it is checked that said data recording device (110) is the borrower (110) of said lending license, checking whether the license including said lending ID associated with said inherent ID included in said lending information is recorded on said borrower (110);
an eighth step of, when it is checked that the license including said lending ID associated with said inherent ID included in said lending information is recorded on said borrower (110), judging that said encrypted contents data and said lending license recorded on said borrower (110) or said lending license can be returned, and returning said encrypted contents data and said lending license recorded on said borrower (110) or said lending license from said borrower (110); and
a ninth step of deleting the lending ID and the inherent ID corresponding to said returned lending license from said lending information.

15. The program allowing a computer to execute the lending and returning according to claim 14, wherein
said borrower (110) holds authentication data demonstrating validity of said borrower (110), and a public encryption key having an inherent value to each said borrower (110),
said inherent ID is said public encryption key, and
said first step comprises:
a step of receiving the authentication data from said borrower (110); and
a step of determining whether or not said received authentication data is valid, and, when it is determined that said received authentication data is valid, receiving said public encryption key from said borrower (110).

16. The program allowing a computer to execute the lending and returning according to claim 15, wherein
in said lending out,
the computer is allowed to further execute a tenth step of encrypting said lending license using said received public encryption key,
in said fourth step, the lending license encrypted in said tenth step is transmitted to said borrower (110).

17. The program allowing a computer to execute the lending and returning according to any of claims 14 to 16, wherein
in said lending out,
the computer is allowed to further execute an eleventh step of checking a possible lending frequency indicating the frequency of lending said encrypted contents data and said license included in said lending information or lending said license to thereby determine whether the lending is permitted or prohibited, and, when it is determined that the lending is prohibited, stopping said lending,
in said fifth step, said possible lending frequency is corrected to a value obtained by subtracting 1 from said possible lending frequency, and changes said lending information to add said lending ID and said inherent ID while associating said lending ID and said inherent ID with said corrected possible lending frequency,
in said return,
in said ninth step, the lending ID included in said returned lending license and the inherent ID associated with the lending ID are deleted from said lending information, and changing said lending information to correct said possible lending frequency, with which said lending ID is associated and recorded, to have a value obtained by adding one to said possible lending frequency.

18. The program allowing a computer to execute the lending and returning according to any of claims 14 to 16, wherein
in said third step, said lending license is generated to include prohibition information for prohibiting said borrower (10) from copying and/or shifting said lending license to the other device.

19. The program allowing a computer to execute the lending and returning according to any of claims 14 to 16, wherein the computer is allowed to further execute:
a twelfth step of making said seventh step execute after completion of said eighth step; and
a thirteenth step of, when it is checked in said twelfth step that the license including said lending ID associated with said inherent ID included in said lending information is recorded on said borrower (110), determining that the lending license is not returned, and stopping executing said ninth step.

20. The program allowing a computer to execute the lending and returning according to any of claims 14 to 16, wherein the computer is allowed to further execute:
a twelfth step of sequentially re-executing said first step, said sixth step, and said seventh step after completion of said eighth step; and
a thirteenth step of, when it is not checked in said re-executed sixth step that said data recording device (110) is the borrower (110) or when it is checked in said re-executed seventh step that the license including said lending ID associated with said inherent ID included in said lending information is recorded on said borrower (110), determining that the lending license is not returned from said borrower (110), and stopping executing said ninth step.

21. The program allowing a computer to execute the lending and returning according to any of claims 14 to 16, wherein
the computer is allowed to further execute:
in said return,
an eleventh step of transmitting the lending ID associated with the inherent ID included in said lending information to said borrower (110);
a twelfth step of issuing a request to transmit status information indicating whether or not the license including said transmitted lending ID is recorded on said borrower (110), to said borrower (110); and
a thirteenth step of receiving said status information transmitted from said borrower in response to said request, and
in said seventh step, it is checked based on said received status information that the license including said lending ID is recorded on said borrower (110).

22. The program allowing a computer to execute the lending and returning according to claim 21, wherein
in said thirteenth step, said status information is received from said borrower as electronic signature-added data having an electronic signature demonstrating validity of said status information added to said status information, and
it is determined whether said status information included in said electronic signature-added data is valid based on the electronic signature included in said received electronic signature-added data, and, when it is determined that said status information included in said electronic signature-added data is not valid, execution of the following steps is stopped.

23. The program allowing a computer to execute the lending and returning according to any of claims 14 to 16, wherein
in said eighth step, said encrypted contents data and said lending license or said lending license is deleted from said borrower, thereby returning said encrypted contents data and said lending license or said lending license from said borrower (10).
